# EUROPEAN PATENT APPLICATION

(11) **EP 1 381 232 A1**
(43) Date of publication of application: **14.01.2004**
(21) Application number: 02708721.2
(22) Date of filing: 29.03.2002
(51) Int. Cl.: H04N 5/91, H04N 5/92, H04N 5/76, G11B 20/10, G11B 27/00

(54) **VIDEO REPRODUCTION APPARATUS FOR DIGITAL VIDEO CONTENT, VIDEO REPRODUCTION METHOD, VIDEO REPRODUCTION PROGRAM, AND PACKAGE MEDIUM**

(30) Priority: 02.04.2001 JP 2001103375
(71) Applicant: MATSUSHITA ELECTRIC INDUSTRIAL CO., LTD., Kadoma-shi, Osaka 571-8501 (JP)
(72) Inventor: OKADA, Tomoyuki, Edinburgh, Lothian EH12 6AE (GB); IKEDA, Wataru, Miyakojima-ku, Osaka-shi, Osaka 534-0023 (JP); NAKAMURA, Kazuhiko, Hirakata-shi, Osaka 573-0084 (JP)
(74) Representative: Eisenführ, Speiser & Partner
(86) International application number: PCT/JP2002/003152
(87) International publication number: WO 2002/082810

(57) **Abstract**

A video reproduction apparatus according to the present invention reproduces externally supplied package media. The package media contains video content storing video data and playback control data controlling reproduction of the video data in a specified data format, and extensible application software using the video content. The video reproduction apparatus includes as software pre-stored and executed in internal memory an operating system chosen from operating systems of plural types, middleware for absorbing differences in function according to the type of operating system, and a player application that runs on the middleware level for reproducing the video content. The middleware has a class library including tools used by the player application to play back the package media or to run the extensible application software. The player application consistently reproduces the video content of the package media according to the specified format by way of the tools included in the middleware class libraries. The extensible application software is run through the tools included in the class libraries of the middleware using video content contained in the same package media.

## Description

### BACKGROUND OF THE INVENTION

### 1. Field of the Invention

The present invention relates to package media recording movies and other such digital video content, and to a video reproduction apparatus, video reproduction method, and video reproduction program using the same. More particularly, the present invention relates to an e-package, a technology for replacing DVD.

### 2. Description of Related Art

### (Package business)

Change in the package business is described first.

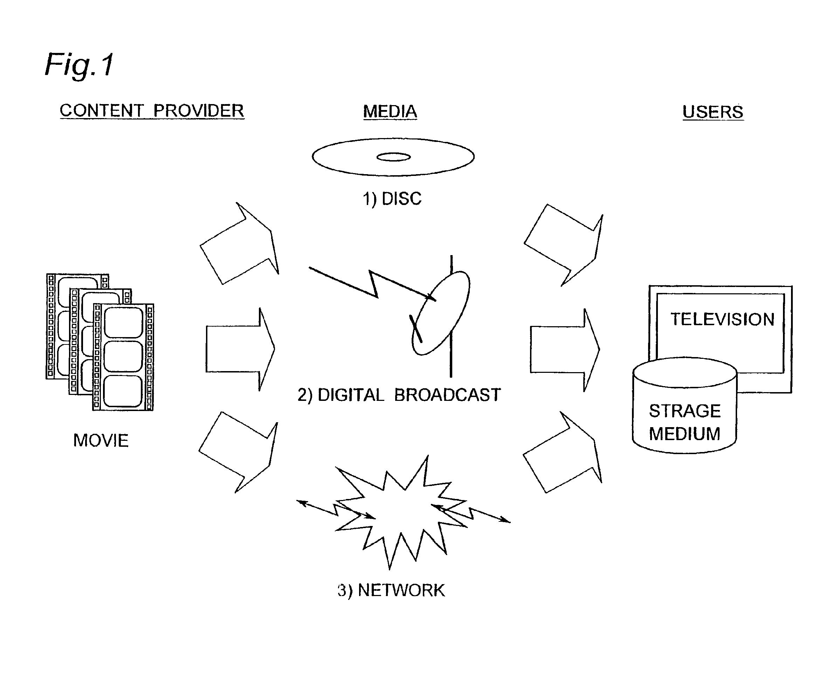

Fig. 1 shows the package business distribution format of today and the future. As shown in Fig. 1, package business distribution concerns how movies and other content owned by a content provider are distributed to users.

In recent years movies and other such content have been supplied from content provider to user using DVDs.

The DVD format has greatly improved the efficiency of the distribution business compared with distribution using conventional video cassettes because the manufacturing cost is reduced by using a stamping process, transportation costs are reduced because of smaller space requirements, and less shelf space is required for display at the retail level.

DVD also offers significant advantages and added value compared with video cassettes, including high picture quality, high sound quality, random accessibility, and such interactive functions as multi-angle viewing.

Content value is described next.

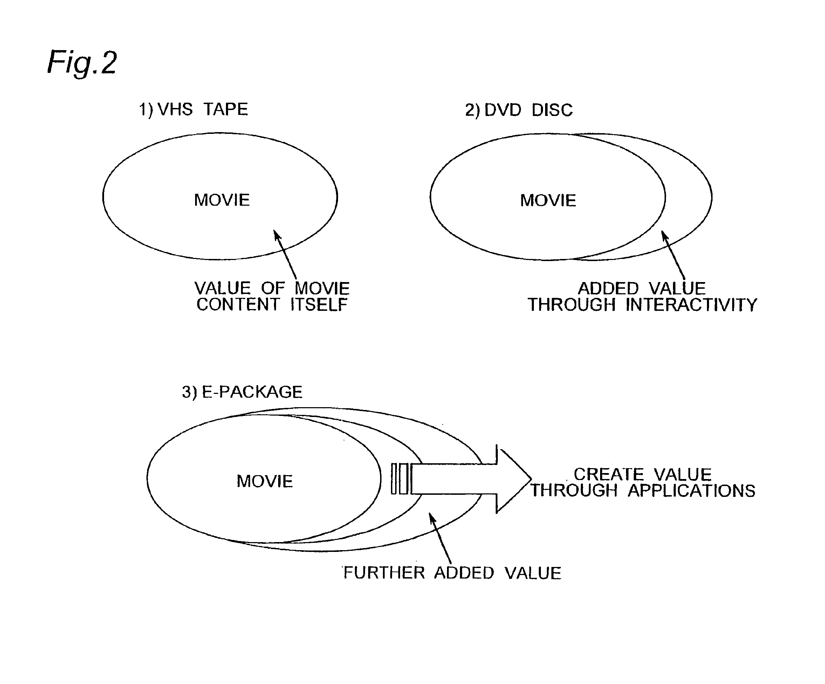

Fig. 2 shows the concept of content value. Conventional video tape records a linear title on tape. In other words, video tape is a medium for providing a movie identical to what is projected in the movie theater, and has no additional value.

On the other hand, DVD has additional value, such as interactive functions as multi-angle and multi-story viewing, title selection from menu, random accessibility, and multi-lingual as sound and caption, except for value of the movie content itself.

Content loses value for various reasons. For music, for example, these include popularity. Much musical content loses value drastically over time as fashions change. The same trend is found with movies.

On the other hand, movies include a story. Viewers interested in the development of a story will watch the sequel. Viewers that already know the story, however, are less motivated to watch the sequel. In other words, the content loses value for individual viewers.

This is why there are few people that watch the same movie everyday but there are many people that listen to the same music everyday. Statistically, value drops gradually in the market for particular content as the population of people that have seen the movie increases.

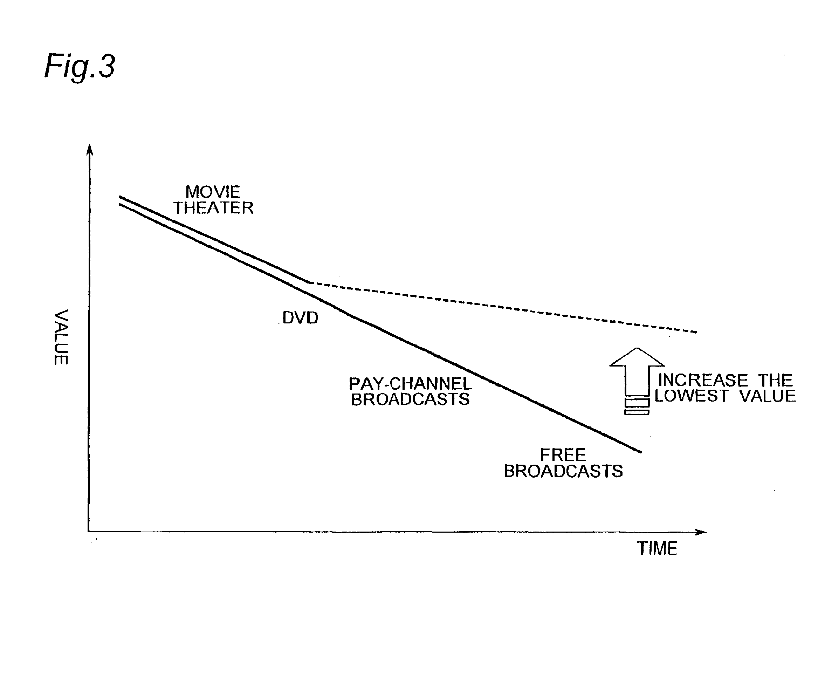

Fig. 3 shows value of content over the time axis and the corresponding movie business. Time is shown on the horizontal axis, and content value is shown on the vertical axis.

Movies have a unique "time shift" business model. Movies are first shown in movie theaters and are later sold to individual end users as packaged software such as DVDs. Movies are then supplied to pay-channels such as pay-per-view services using satellite and cable broadcasting media, and last are made available for free distribution by terrestrial broadcasters. While individual users can view content for free with terrestrial broadcasts, these broadcasts are supported by advertising revenue from corporate advertisers.

### (The DVD example)

Technology supporting the conventional package business is described below using DVD by way of example. It should be noted that unless otherwise specified DVD as used herein refers to DVD-ROM, that is, a read-only disc, and does not refer to DVD-RAM and other such recordable discs.

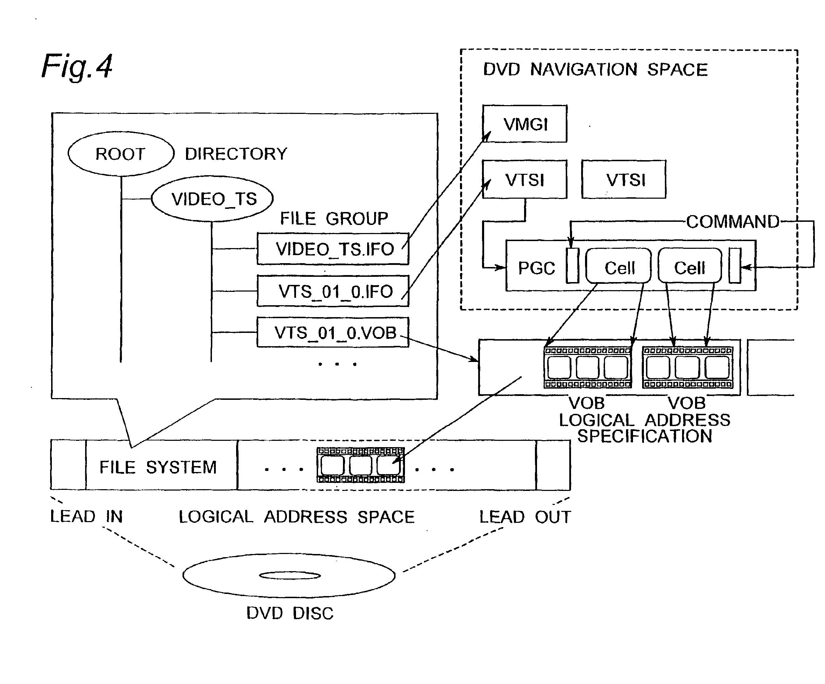

Fig. 4 shows the structure of data recorded to a DVD.

The recording area of a DVD disc has a capacity of approximately 4.7 GB (gigabytes) starting with a lead-in area for stabilizing the servo of the DVD drive, followed by a logical address space for recording two values, 0 or 1, and ending with by a lead-out area indicating the end of the disc recording area.

The logical address space starts with a file system recording area followed by navigation data describing the AV data and movie scenario.

The file system is a system for managing data as files and directories (folders), and all AV data and navigation data recorded to the DVD disc can be handled as directories and files through the file system.

As shown in Fig. 4, a directory, called the VIDEO_TS directory, storing the DVD video titles is recorded directly below the root directory on a DVD disc. This directory contains files such as the VIDEO_TS_IFO and VTS_01_0.IFO files recording navigation data enabling scenario management and interactivity, and a VTS_01_0.VOB file recording AV data.

A stream conforming to the ISO/IEC 13818 (MPEG) standard is recorded as the AV data. One MPEG stream is called a VOB in the DVD format, and plural VOB objects are recorded to files having the ".VOB" extension. Plural VOBs are recorded sequentially to one VOB file, and if the size of a VOB file exceeds 1 GB, the VOB file is segmented and recorded as plural VOB files each no more than 1 GB.

The navigation data broadly includes VMGI data for managing the entire disc, and VTSI data relating to the individual files. Included in the VTSI data is PGC information containing Cells defining all or part of a VOB (MPEG stream) as the reproduction unit. A Cell defines the reproduction sequence. What is important to note here is that while a Cell is used to indicate part or all of a VOB, a Cell is address data referencing the logical address space.

With the hard disk drive (HDD) of a computer, for example, there is no guarantee that any same file will always be recorded to the same place on the hard disk because files are repeatedly recorded, edited, and deleted. The biggest feature of the file system is that applications treat the file as the same file regardless of where the file is recorded on the hard disk.

DVD enables a fusion of AV and PC technologies, and while it provides a file system DVD also uses a data structure that is logical address aware. The performance of consumer AV equipment is far from PCs. In fact, there were even concerns about including a file system as part of DVD performance when DVD was first introduced. There were, however, high expectations for using DVD with both consumer electronics and personal computers. Today, in fact, personal computers equipped with the ability to read DVDs are not rare.

In other words, DVD was preferably to provide both practical performance in consumer electronics and the ability to be accessed with personal computers. The DVD standard was therefore designed so that PCs can access data through the file system while consumer AV products without a file system function can access the data through the logical address space.

DVD was therefore able to gain broad support from users of both consumer electronics and personal computers.

### (Problems with the DVD standard)

The distribution model of the present and future package business is described with reference to Fig. 1. As shown in Fig. 1 explosive growth in the Intemet and deployment of practical satellite broadcasting services mean that package distribution is no longer limited to methods using physical discs.

Some types of content are already distributed as data streams over the Internet. Set-top boxes (STB) with a built-in hard disk drive (HDD) as a temporary storage medium have also become available in the last few years. Digital broadcasts are recorded to the hard disk drive for viewing at a later time. It will thus be apparent that the content business environment is changing dramatically.

Distribution of movie content is also expected to change from distribution via DVD and other physical media to electronic distribution using the Internet and digital broadcasting.

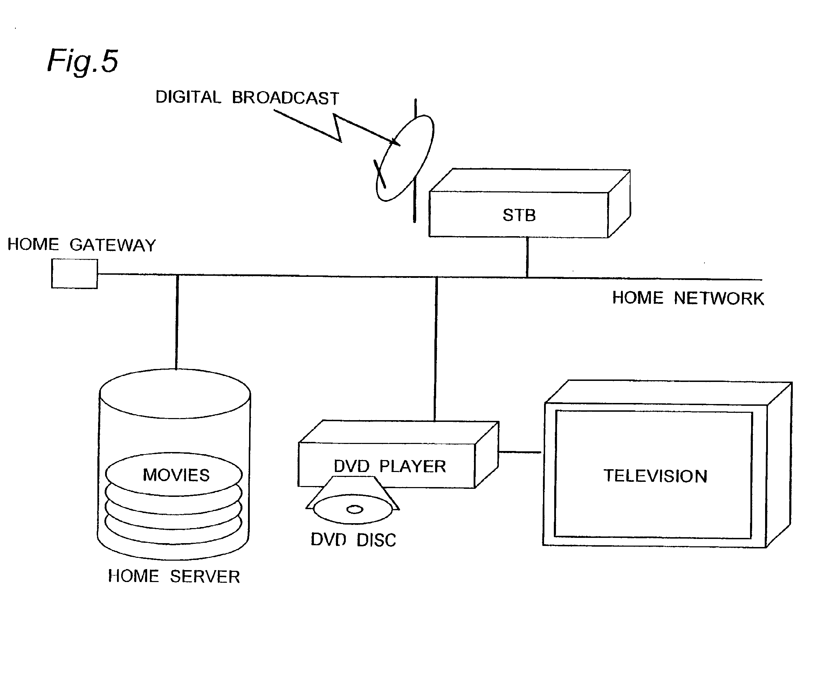

Fig. 5 shows a residential configuration of AV equipment.

The environment surrounding AV equipment has been changed greatly by the Internet and digital broadcasting. A home network is needed to, for example, connect AV equipment to the Internet, connect a set-top box (STB) for receiving digital broadcasts to a recorder and television, and interconnect the various components.

Content distribution via digital broadcasts in particular is push mode distribution whereby a one-way data stream is simply sent from the distributor rather than pull mode distribution whereby content is sent in response to user requests sent via the Internet, for example. This situation requires a system to protect the copyright of the distributed content. Copyright protection systems are being achieved using a combination of encryption technology and the Digital Rights Management (DRM) system technology.

Also required is technology for managing content value. For example, greater added value than is provided by current DVDs as shown in Fig. 2, and a system for managing content value according to the distribution cycle and distribution channel as indicated by the time shift model shown in Fig. 3, are needed. The structure of existing DVDs does not enable adding new added value or management features because it is based on selling the discs (sell-through).

### (Problems with content distribution)

A problem with content distribution is the number of competing digital broadcasting systems.

In Japan, for example, both communication satellite (CS) digital broadcasts and broadcast satellite (BS) digital broadcasts are available, and CS 110°, a new combination of broadcast satellite and terrestrial digital broadcasting, is about to start operation. Different digital broadcasting systems are used in different European countries, but there is a trend towards standardizing on the DVB (Digital Video Broadcasting) system. This DVB system, however, differs from the Japanese system. A proprietary system known as ATS is being considered in North America.

Managing the different systems used for digital broadcasting in different regions is even more complicated than the NTSC and PAL systems, for example, used with conventional analog broadcasts.

Content such as movies that are marketed throughout the world must therefore be authored for particular regions, and this can be expected to greatly increase production cost.

One potential solution to this problem is a standardized worldwide electronic distribution package for electronically distributing content comparable to DVDs. However, if this electronic distribution package simply replaces pay-channel broadcasts and free terrestrial broadcasts, the same content available on DVD can be enjoyed via free terrestrial broadcasts, thus reducing user desire to purchase DVDs and presenting the danger of destroying the DVD business.

There is therefore a need for technology adding new added value according to the content distribution cycle, such as technology for managing added value by imposing limits on the ability to playback content according to the user.

### SUMMARY OF THE INVENTION

An object of the present invention is therefore to resolve the above-described problems of adding added value to content, and managing content value according to the distribution cycle and distribution channel. More specifically, an object of the invention is to provide e-package technology for building a new content business appropriate to the network age.

### (Method of solving the problem)

In accordance with one aspect of the present invention, there is provided a video reproduction apparatus for reproducing externally supplied package media. The package media containing video content storing video data and playback control data controlling reproduction of the video data in a specified data format, and extensible application software for using the video content. The video reproduction apparatus includes as software stored and executed in internal memory, an operating system, middleware, and player application software. The operating system is chosen from operating systems of plural types. The middleware absorbs differences in function according to the type of operating system. The player application software runs on the middleware level for reproducing the video content. The middleware has a class library including tools used by the player application to play back the package media or to run the extensible application software. The player application software consistently reproduces the video content of the package media according to the specified format by way of the tools included in the middleware class libraries. The extensible application software runs by way of the tools included in the class libraries of the middleware using video content contained in the same package media.

This video reproduction apparatus reproduces e-package video content. The operating system could be, for example, the Microsoft Windows (R) operating system, the Mac OS (R) from Apple Computer, or the freeware Linux operating system. The operating system shall also not be limited to these systems and includes operating systems from other manufacturers. The middleware could be Java, for example. Functional differences resulting from differences in the type of operating system can be absorbed by the middleware. The player application software reproduces the video content of the package media. The extensible application software could be, for example, a game application using the video content of the package media. The player application software and extensible application software operate at the middleware level. The middleware also has class libraries containing tools used by the application software when it runs or reproduces the video content. The tools contained in the middleware refer to the classes and member functions thereof for achieving various functions, for example. It will also be noted that this video reproduction system can be achieved by running software distributed over a network.

Preferably, the video reproduction apparatus manages playback status data, the playback control data of the package media includes playback restriction data corresponding to the playback status data, and the extensible application software sets a tool contained in the class libraries of the middleware to an invalid state by analyzing the playback control data and comparing the playback restriction data in the playback control data with the playback status data.

In another aspect of the present invention, there is provided a video reproduction method for reproducing externally supplied package media with a video reproduction apparatus. The package media includes video content storing video data and playback control data controlling reproduction of the video data in a specified data format, and extensible application software for using the video content. The video reproduction method includes the steps of:
a step for reading into internal memory of the video reproduction apparatus and activating an operating system chosen from operating systems of plural types;
a step for reading into internal memory of the video reproduction apparatus and activating middleware for absorbing differences in function according to the type of operating system, the middleware having a class library including tools used by application software operating at the middleware level to run or reproduce the package media;
a step for reading into internal memory of the video reproduction apparatus and activating a player application operating at the middleware level for reproducing the video content; and
a step for reading into internal memory of the video reproduction apparatus and activating extensible application software operating at the middleware level and using the video content.

Additionally, the player application software consistently reproduces the video content of the package media according to the specified format through the tools included in the class libraries of the middleware. The extensible application software also runs by way of the tools included in the class libraries of the middleware using video content.

In a further aspect of the present invention, there is provided a video reproduction program for reproducing externally supplied package media. The package media contains video content storing video data and playback control data controlling reproduction of the video data in a specified data format, and extensible application software for using the video content. The video reproduction program includes as software stored and executed in internal memory, an operating system, middleware, and player application software. The operating system is chosen from operating systems of plural types. The middleware absorbs differences in function according to the type of operating system. The player application software runs on the middleware level for reproducing the video content. The middleware has a class library including tools used by the player application to play back the package media or to run the extensible application software. The player application software consistently reproduces the video content of the package media according to the specified format by way of the tools included in the middleware class libraries. The extensible application software runs by way of the tools included in the class libraries of the middleware using video content contained in the same package media.

In addition, a computer-readable recording medium according to the present invention stores the above video reproduction program.

In a still further aspect of the present invention, there is provided a package media externally that is supplied to a video reproduction apparatus and reproduced by the video reproduction apparatus. The package media contains video content storing video data and playback control data controlling reproduction of the video data in a specified data format, and extensible application software for using the video content. The video reproduction apparatus includes as software stored and executed in internal memory, an operating system, middleware, and player application software. The operating system is chosen from operating systems of plural types. The middleware for absorbs differences in function according to the type of operating system. The player application software runs on the middleware level for reproducing the video content. The middleware has a class library including tools used by the player application to play back the package media or to run the extensible application software. The player application software consistently reproduces the video content of the package media according to the specified format by way of the tools included in the middleware class libraries. The extensible application software runs by way of the tools included in the class libraries of the middleware using video content contained in the same package media.

This package media is an e-package with high added value. That is, the video content of this package media is not limited to being reproduced by the player application software, and can also be run in conjunction with game application software that uses the video content, for example. In addition, the package media may contain scenario data defining the playback sequence of the video data in the playback control data. Yet further, the playback control data can contain playback level data setting a level controlling the use of a game application or the playback of video content.

### BRIEF DESCRIPTION OF THE DRAWINGS

The present invention will become readily understood from the following description of preferred embodiment thereof with reference to the accompanying drawings, in which like parts are designated by like reference numeral and in which:
Fig. 1 is a conceptual drawing of the package business;
Fig. 2 is a conceptual drawing showing content value;
Fig. 3 is a conceptual drawing showing the time shift business in movies;
Fig. 4 illustrates the structure of the DVD standard;
Fig. 5 shows a typical configuration of AV equipment in the home;

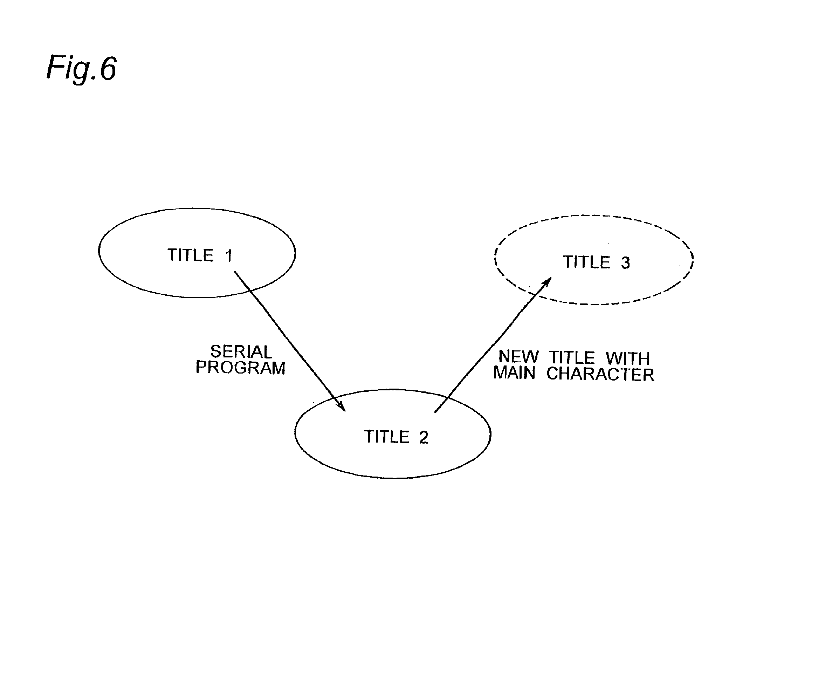

Fig. 6 shows the concept of links between video titles;

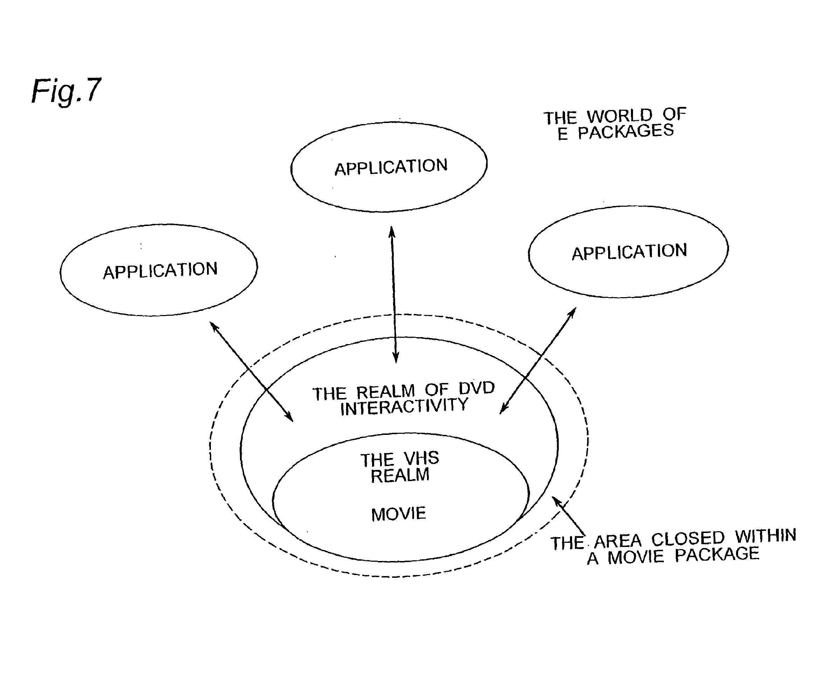

Fig. 7 shows the concept of new value;
Fig. 8 is a conceptual drawing of e-package levels;
Fig. 9 shows the concept of various standards;
Fig. 10 shows the configuration of a middleware model player;
Fig. 11 shows the concept of a "player" application;
Fig. 12 shows the concept of a "game" application;
Fig. 13 shows the concept of a "movie link" application;
Fig. 14 shows the structure of an e-package specification;
Fig. 15 shows the directory and file structure;
Fig. 16 shows a listing of the package data;
Fig. 17 shows a listing of the menu data;
Fig. 18 shows a listing of the title data;
Fig. 19 shows a listing of the stream data;
Fig. 20 shows a listing of the subtitle stream;
Fig. 21 shows the stream structure;
Fig. 22 is a block diagram of the video reproduction apparatus;
Fig. 23 shows the software structure;
Fig. 24 is a class listing;
Fig. 25 is a flow chart of the Package class process;
Fig. 26 is a flow chart of the Title class process;
Fig. 27 is a flow chart of the Menu class process;
Fig. 28 is a flow chart of the Audio class process;
Fig. 29 is a flow chart of the Event class and Link class process;
Fig. 30 is a flow chart of the playback process of the player;
Fig. 31 shows a sample menu;
Fig. 32 is an example of operation while playing back a title;
Fig. 33 is a flow chart of the enableEvent function;
Fig. 34 is a flow chart of the Cursor class process;
Fig. 35 is a flow chart of the Status class process;
Fig. 36 is a flow chart of the Canvas class process;
Fig. 37 is a flow chart of the game application playback process;
Fig. 38 shows the concept of an update Status operation; and
Fig. 39 is a flow chart of the Package class.

### DESCRIPTION OF THE PREFERRED EMBODIMENTS

A preferred embodiment of the present invention is described below with reference to the accompanying figures. It should be noted that like reference numerals represent like parts in the figures.

### (A new business model)

As described with reference to Fig. 2 and Fig. 3, the value of movie content decreases with time. In addition, the existing business model must be changed in order to advance electronic distribution worldwide.

Package media according to this embodiment of the invention (referred to below as an "e-package") containing digital movie content introduces an application suited to movies as added value as shown in Fig. 2. This increases the value of the package. The value derived from the application can also be controlled and different package levels can be used for differentiation of even a single title.

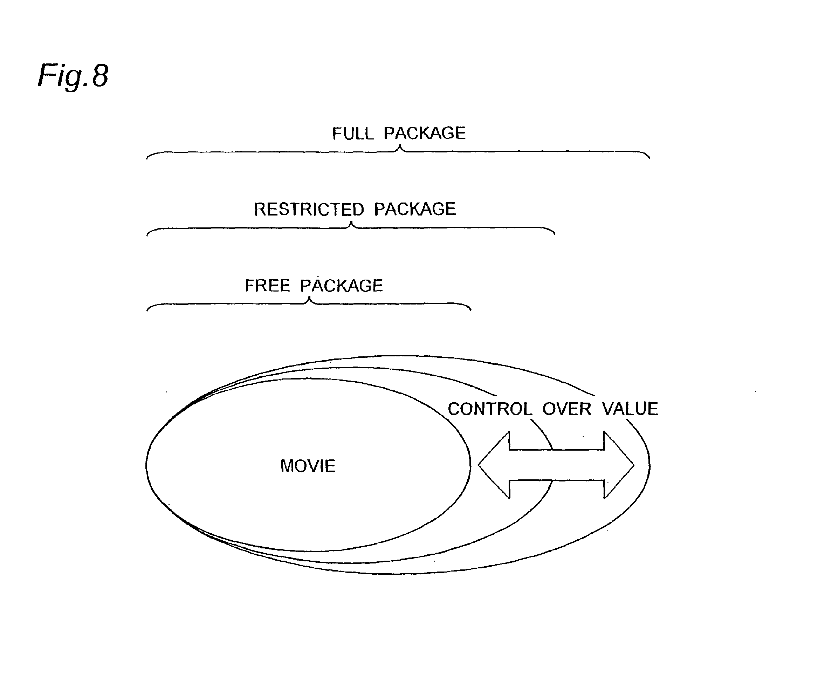

Package value could be controlled as shown in Fig. 8, for example, by providing a "full package" enabling all applications, a "limited package" enabling using of only some applications, and a "free package" enabling only viewing the movie content.

In the package business shown in Fig. 3, the full package could be distributed in place of existing DVDs, the limited package in place of pay channel broadcasts, and the free package in place of free broadcasts.

This embodiment of the invention is described using only three levels, but it is also possible to further refine the package levels and develop a more targeted distribution business.

### (Structure of various standards)

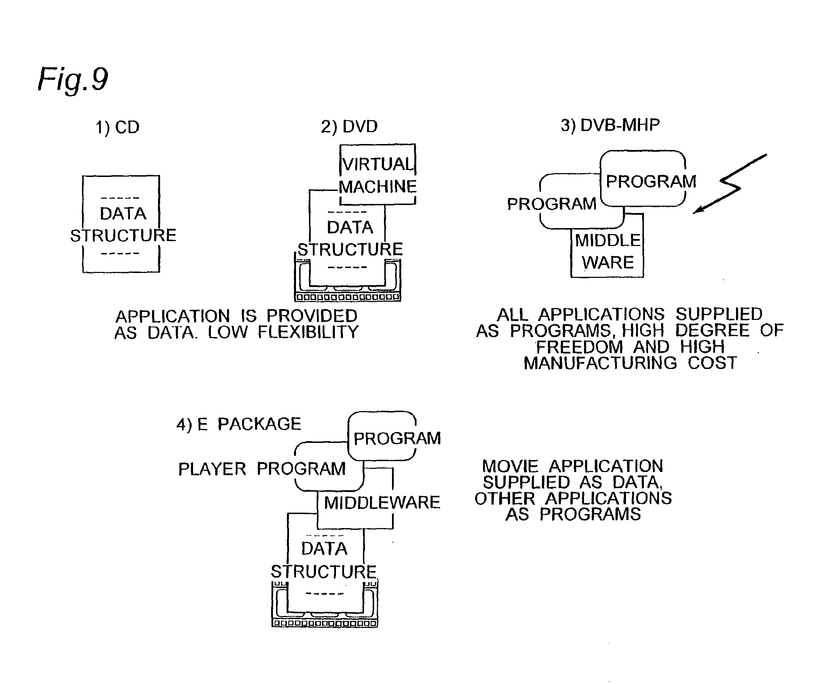

The standards and concepts of such typical media as CD, DVD, DVB-MHP, and e-package are described below using Fig. 9. It should be noted that VHS is a set of physical characteristics and electrical signals, and differs greatly from other standards having a data structure, and further description of VHS is therefore omitted.

CDs have data sampled at 44.1 kHz sampling frequency and a TOC (Table Of Contents) containing index data for individual tracks (songs). A CD player reads the TOC, receives a request from a user (such as to play track 3), reads the data for the corresponding song, and applies D/A conversion to play the song.

Although not shown in the figure, Video CD, an enhanced CD version, records an AV stream and corresponding index called a PSD (Programmable Sequence Descriptor). A Video CD player reads and decodes a requested AV stream according to user operations.

The data structure is standardized and the player interprets and reproduces the data structure according to the standard with both CDs and Video CDs.

The concept of a virtual machine was introduced with DVD. This is a configuration having an operation processing function and register (dedicated memory) just like a CPU. DVD player operation differs according to user input and register values based on the scenario data recorded as the data structure.

To describe a simple example, a story could branch depending upon whether the viewer is an "adult" or a "child under 18 years of age." This is what the "parental lock" function does. Sexually explicit scenes and violent scenes in the movie are removed so they are not shown to children. It is also possible to change the story and angle according to whether the viewer is male or female.

In addition to a static data structure, the DVD standard also defines an operating model for the player (also called a video reproduction apparatus) as a virtual machine. This assures compatibility between different players by absorbing differences the in hardware and software platforms of different disc player manufacturers and software implementations of the player application.

The DVB-MHP (Digital Video Broadcasting Multimedia Home Platform) is described next. DVB-MHP is a next-generation digital broadcasting specification that is being standardized in Europe. The biggest feature of this specification is that it uses Java middleware.

Java is middleware promoted by Sun Microsystems as a way to improve compatibility between platforms. All Java applications will run on a computer or device equipped with Java, and the greatest feature of Java applications is that they are not limited to a particular platform and can be used in a wide range of operating environments.

In Japan steps are being taken to implement Java on NTT DoCoMo's i-mode service and in HAVi, a home AV equipment networking system.

With the introduction of Java, DVB-MHP also defines an object class and interface specifically for DVB-MHP, that is, for processing video programs from television broadcasters and data broadcasting programs.

DVB-MHP differs from conventional standards in that it does not define a static data structure, but instead defines a middleware interface as the standard.

This means that anything that can be created as a computer program can be used in the application. On the other hand, no system for creating the application is provided. When compared with the conventional content business, the applications are therefore closer to- a computer game than to music, movies, or other AV source.

An e-package according to the present invention provides middleware similarly to DVB-MHP so that various applications can run on the player. However, it is preferable to have a conventional type of static data structure and a player operation model such as a virtual machine in order to efficiently create the largest type of content, that is, movies.

For this reason an e-package according to the present invention defines a static data model suitable for movie content and a player operation model. This e-package also provides an interface for an application that increases the value of movie content.

### (Player model)

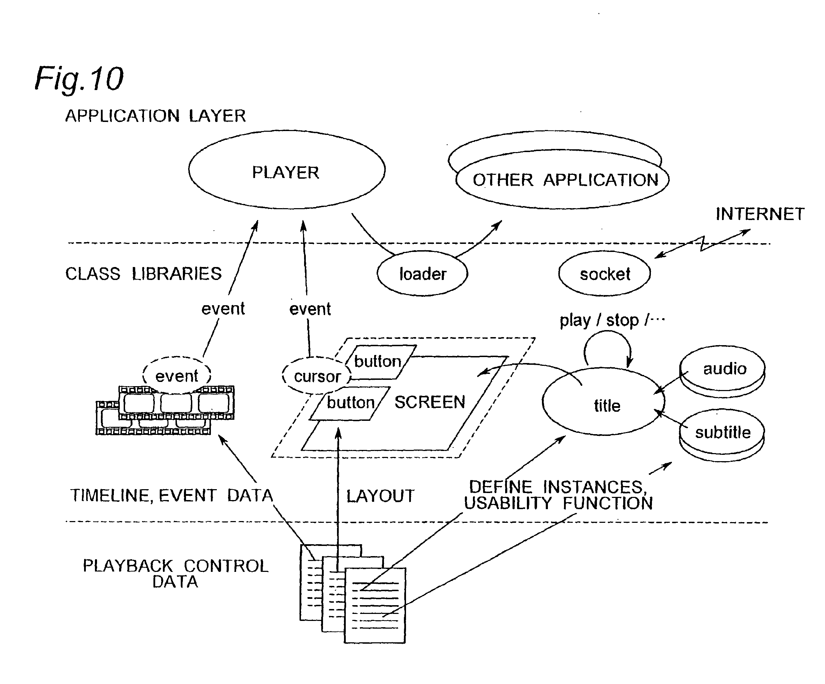

Fig. 10 shows the concept of a player model implemented using middleware.

An object oriented programming language such as Java is used for the middleware in this example. Numerous books and papers about object oriented programming languages and their basic classes are publicly available from various Internet web sites, and further details, particularly about class library processing, are therefore omitted here.

Functions such as the title and language setting are defined by classes and member functions of the e-package middleware. An instance of each class is instantiated when the class is run, and can then be accessed by the player application or other application.

Classes are briefly defined below. The ovals in Fig. 10 indicate an instance of each class.

The Title class is a unique e-package class equivalent to a movie title. Each class contains scenario information such as chapters, AV data address information, and interface data supplied to the application.

All of this information is written to a playback control data file (shown in the bottom row of the figure). Attributes described by the playback control data are used as the object attributes. For example, the level attribute of the Title instance is specified by the level attribute of playback control data Title.

A Title class also has member functions (methods) for playback control.

For example, a title is played by calling the Play() function, and playback is stopped by calling the Stop() function.

The function of these member functions (methods) is also controlled by the playback control data. Use of the Title instance SetRate function (a special playback function, for example, is limited by setting the <SETRATE level ='"'> attribute in the playback control data.

The Audio class is equivalent to the audio stream. This class is instantiated for each audio stream. Each instance contains stream attributes and language information. The audio stream language information, for example, is defined by setting <AUDIO language = "Japanese"> in the playback control data. This attribute can be fetched from the Audio instance using the member function getLang().

The e-package is compatible with multiple languages, similarly to DVD, and the user can select the audio stream of choice. The player application receives a user request and instantiates (sets) a corresponding Title class instance. The language setting is then detected using the getLang() member function of each Audio instance as described above to select the Audio instance matching the user request, and passed (set) to the Title instance.

The Subtitle class is equivalent to the subtitle stream, and has substantially the same functions as the Audio class.

The Socket class is for communicating over a network with other players (video reproduction apparatuses) and servers, for example.

The Loader class is for dynamically loading other applications. Applications dynamically loaded by the Loader class are defined in the playback control data file. The Loader class is normally used to reproduce other applications using the player application. However, it is not always necessary to call the Loader class when an application containing a player function is run.

The Event class is for generating an event trigger described in a scenario. It could be used to display dialog for the user during the movie, for example.

The Cursor class is for passing cursor movements by the user to the application. It catches movement of the cursor, for example, using a remote control.

The Button class, Canvas class, and Frame class are for displaying a button, canvas, and frame, respectively, on the screen. These classes are drawn by generating an instance and adding it to the screen.

The Canvas class in particular is for drawing moving pictures. A moving picture is presented on screen by adding a Title instance to an instance of the Canvas class. Displaying a moving picture is terminated by removing (deleting) the Title instance.

The Text class is used for displaying text on screen. Text is drawn on screen by the constructor creating a Text instance and adding the Text instance to the Canvas instance.

### (Sample application)

The application described below can be achieved by means of the player model described above.

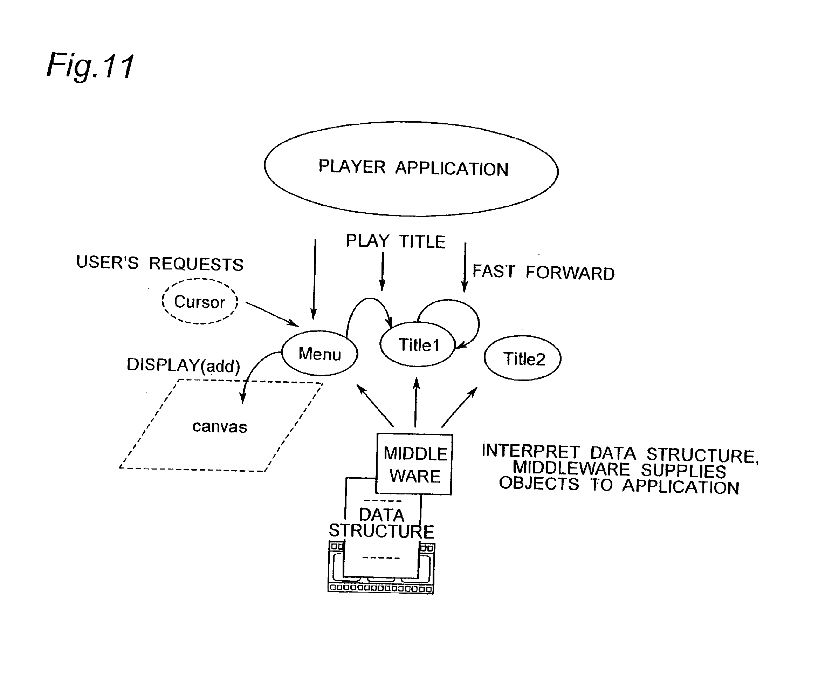

An example of a simple DVD player is shown in Fig. 11. As shown in Fig. 11 the DVD player application is also loaded as a middleware application. The player application creates an instance using the class libraries provided by the middleware and calls the member functions of the instance to playback a title.

For example, menus are displayed on screen by adding a menu instance created from the Title class to a Canvas instance to accept user requests. The user then uses the cursor to select a title to be played.

User requests pass through an instance of the Cursor class to reach a title or menu. For example, an instance of the Title class corresponding to the title selected by the user is created with a menu, added to a Canvas instance, and played.

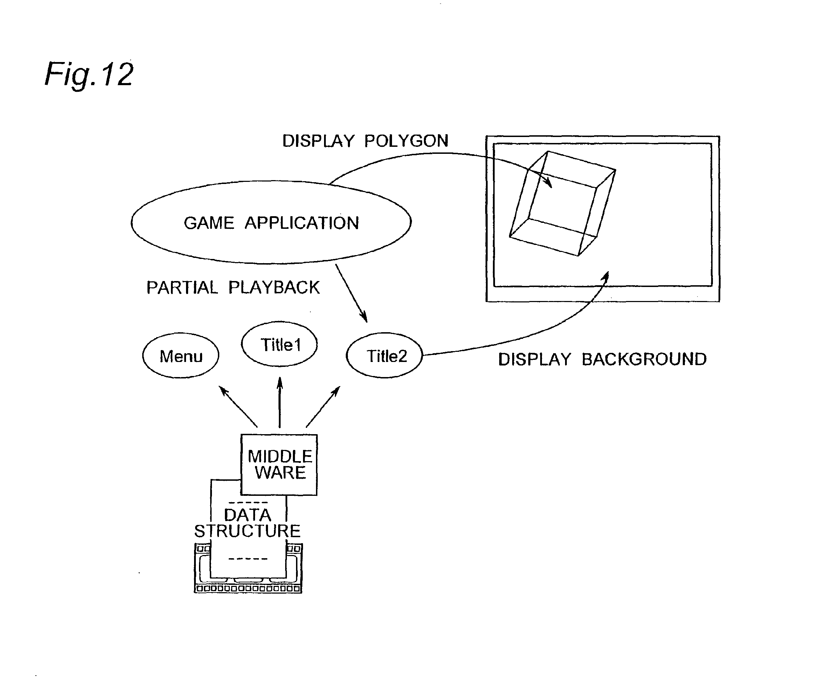

Fig. 12 shows an example of a game application.

A game application is run instead of the player application in Fig. 12. The game application selects a desired screen from the titles included in the package and displays it as the background screen for the game. The game application adds a 3D polygon to the background image and advances the game. The basic operation is the same as the player application described above except that the application program is a game application instead of a special player application.

It is, of course, possible to minutely control the background image and display it synchronized to the game.

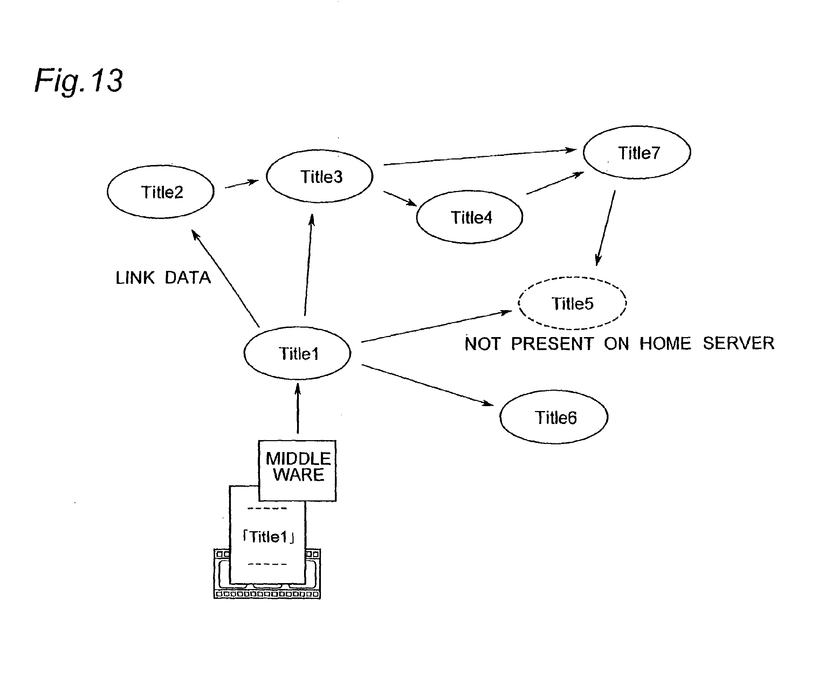

Fig. 13 shows an example of links between titles.

As described above, much movie content is recorded on the home server. Which movie titles are actually recorded is different in each family, and the links between the titles cannot be singularly defined as shown in Fig. 13.

The structure of an e-package according to the present invention therefore contains information defining which titles are linked to each title, and considers only those links to actually valid titles to be valid for playback.

For example, Title1 in this example has links to Title2, Title3, Title5, and Title6, but Titles is not on the home server. Valid links during the playback of Title1 are therefore Title2, Title3, or Title6. It is thus possible to dynamically select only those links that can be reproduced.

### (Structure of the standard)

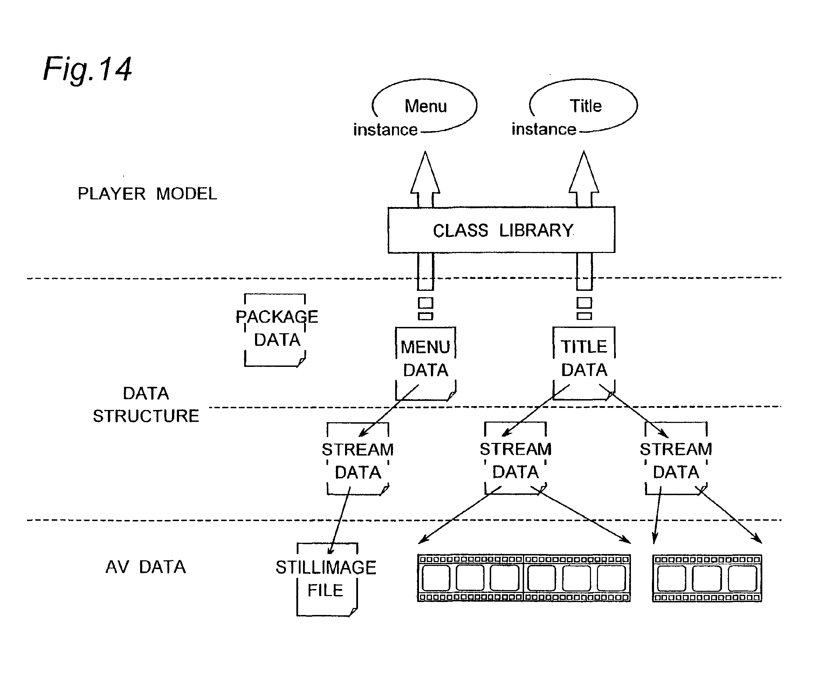

Fig. 14 shows the structure of the standard.

As shown in Fig. 14, the e-package standard consists of three major parts, the player model, data structure, and AV data.

The player model is designed as a class library of an object oriented programming language, and creates instances of the menus, titles, and other functions based on the playback control data for the application.

As shown in Fig. 14, the data structure includes package data for managing the overall package, menu data describing the menus, title data describing scenarios for each title, and stream data describing attributes for and address information for accessing each stream. These are described in detail below.

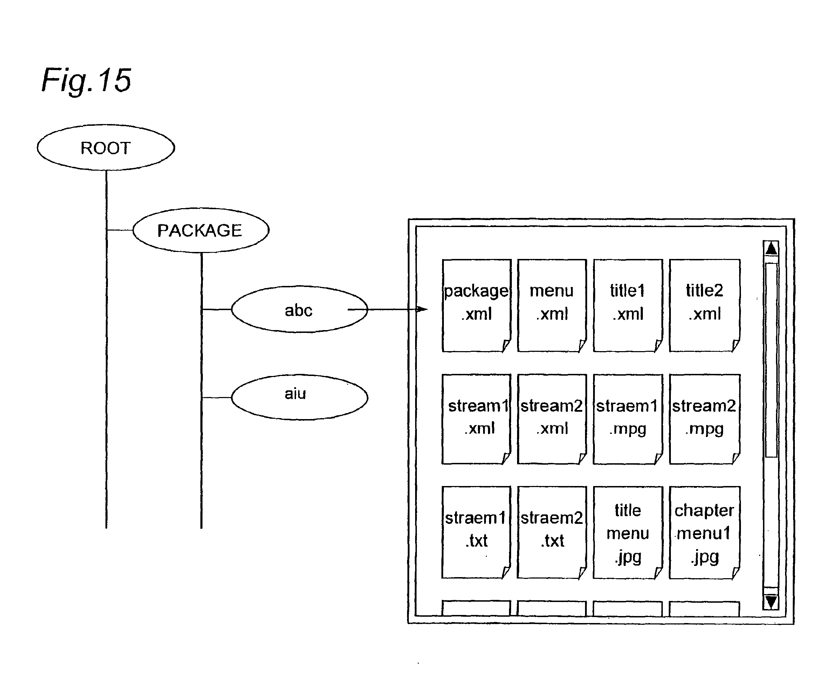

The package directory and file structure is described first with reference to Fig. 15.

An e-package may be distributed as a single optical disc in the same way DVDs are distributed, or electronically over a network for storage to a hard disk drive. The directory (also referred to as a folder) and file structure described here is common to both distribution formats.

An e-package introduces a file system similarly to DVDs.

A PACKAGE directory is located directly below the root directory in the e-package file system. This directory is a specialized e-package directory and is not used by other applications, including conventional DVD data. Subdirectories are located below the PACKAGE directory, each subdirectory rotating to a single package. The subdirectories in Fig. 15 are labelled "abc" and "def."

Stream data and various management data files are stored under each subdirectory. The first file, package.xml, is a reserved file used for recording the above-described package data. Other files include menu.xml describing the menus, title1.xml and title2.xml describing the title, and stream1.xml and stream2.xml recording the stream data.

### (Data structure in detail)

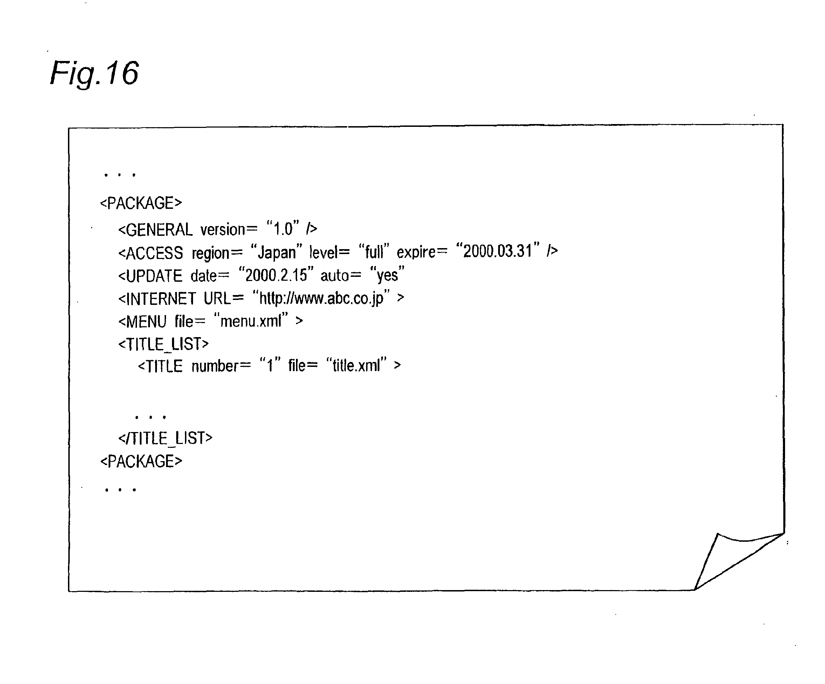

Fig. 16 shows the content of the package data file package.xml in detail.

Package data is enclosed within the <PACKAGE> tag according to XML convention as described above, and includes the following information.
<GENERAL> general information tag
Version information (version)
<ACCESS> access control information tag
Region information (region)

The region where e-package video content can be reproduced can be restricted by using this region information to control access to video content. Time-shift distribution of a movie title can be controlled so that, for example, a title can be supplied first to the North American market and then in sequence to Europe and Japan, the rest of Asia and then China, by sequentially increasing the regions where playback is enabled or by setting the region code for each particular region. The region information (region) is set to values such as "US," "Japan," "EU," "Asia," and "China."
<UPDATE> update announcement information tag
date information (date)
auto-update flag (auto)

The update announcement information describes the automatic update schedule for scenarios and movie titles. The player (video reproduction apparatus) can automatically update to new content over the Internet based on this information.
<INTERNET> Intemet web site address tag
URL (URL)

This Internet web site address entry contains the URL to a web site on the Internet containing related information. When the user requests Internet access, this URL is accessed.

This address is also used to get information for the UPDATE function.
<MENU> menu information tag
menu data file (menu)

MENU specifies the menu data file. The menu data is written to the specified file.
<TITLE_LIST> title list tag

The titles contained in the package are declared using the <TITLE> tag bracketed between <TITLE_LIST> tags.
<TITLE> title information tag
title number (number)
title information file (file)

The title information describes the links to each other title. Each individual title is written to the specified title information file.

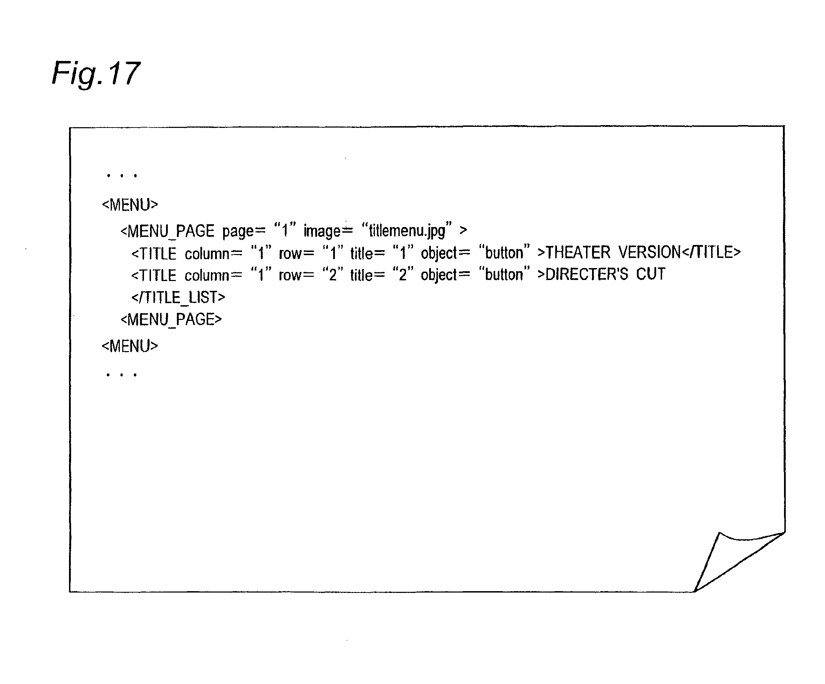

Fig. 17 shows the content of the menu information file menu.xml in detail.

The menu information shown below is written between <MENU> tags.
<MENU_PAGE> menu page information tag
page number (page)
background image data (image)

The menu page information relates to multipage menus having multiple menu screens. A multipage menu is used, for example, when there are more 100 titles to display and all titles cannot be presented on one page.
<TITLE> title information tag
horizontal coordinate (column)
vertical coordinate (row)
title number (title)
object name (object)
title name (inside the end <TITLE> tag)

Data for each title is written in each <TITLE> element. The player application displays the menus based on this information. Components specified as objects are displayed on screen as a graphical user interface. These components are supplied as functions of a class library of the middleware.

If, for example, the object attribute is set to a button as shown in Fig.. 17, a button object as defined by the graphic library of the middleware is displayed in the menu. The display position is indicated by the horizontal coordinate (column) and vertical coordinate (row) attributes, and the title from the title attribute is displayed on top of the button.

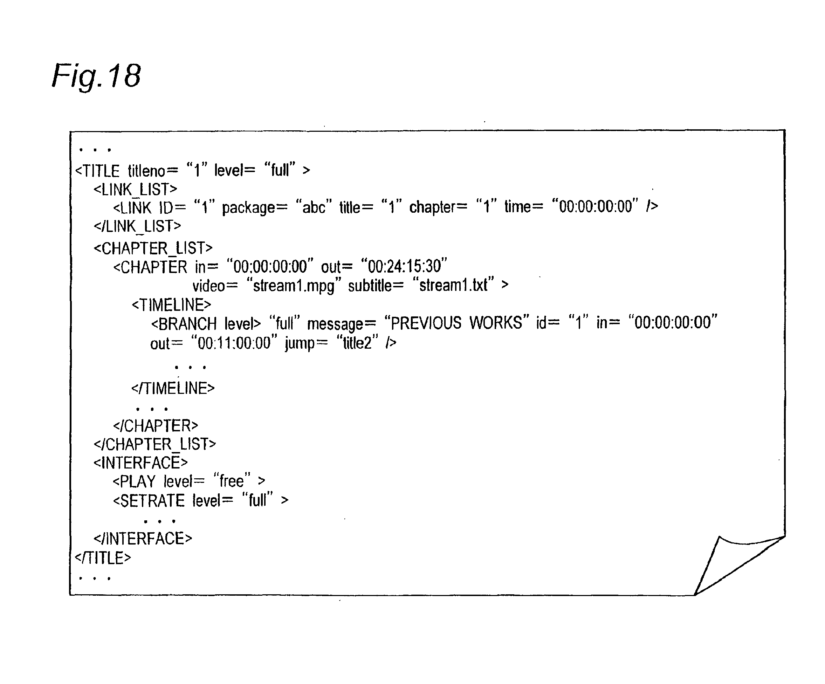

Fig. 18 shows the content of the title data file title1.xml in detail.

The title data shown below is written between the <TITLE> tags.
<TITLE> title data tag
title number (title)
level (level)

The level is the reproduction level of the title. Setting a package reproduction level in the e-package as described above makes it possible to control the reproduction level of the package according to the purchasing conditions of the user. More specifically, the level attribute is set to the value for a full package (full), restricted package (restricted), or a free package (free). On the other hand, if the status attribute (Status) of the player is set to enable full package playback (full package) all packages can be reproduced; if the status attribute (Status) is set to restricted playback, packages with the level attribute set to restricted or free can be reproduced. If the player-side attribute is set to free only, then only free packages (free) can be reproduced.

It should be noted that there are only three types of packages in this example, but the number of levels is not a basic problem and there could be two, four, or more levels used to restrict playback. How the divisions determined and what they are called shall also not be limited to those in the preceding description.
<LINK_LIST> link list tag
This tag defines the list of links occurring in the title.
<LINK> data
identification information (ID)
linked package information (package)
linked title information (title)
linked chapter information (chapter)
linked time information (time)

Link data is described at each LINK data tag. The link data is actually used in the timeline data described further below. Link data is defined so that the player can automatically detect whether links are valid or invalid when the title starts.
<CHAPTER_LIST> chapter list tag
<CHAPTER> chapter data
start time (in)
end time (out)
playback stream data (video)
subtitle data (subtitle)
Chapters are entries in the title data.
<TIMELINE> Timeline data tag

Information about events, for example, the develop along the time base are described within <TIMELINE> tags. The described information is as follows.
<BRANCH> branching information
level data (level)
message data (message)
identification data (ID)
valid interval start time (in)
valid interval end time (out)
branch destination title (jump)

The level data attribute (level) is a flag indicating what process is enabled according to the Status of the video reproduction apparatus as described above. For example, if the Status of the video reproduction apparatus is set to free only for playing only free packages and the level attribute (level) is set to full for playing the full package, the <BRANCH> tag is ignored. The identification attribute (ID) corresponds to the ID value in the LINK data.

When the player model receives branch request from a user, it starts reproduction at the location described in the corresponding LINK, data.
<MESSAGE> data tab
level data (level)
message data (message)
identification data (ID)
valid interval start time (in)
valid interval end time (out)

The message written in the MESSAGE tab is displayed as superimposed text using the on-screen display of the player.
<TRIGGER> event trigger tag
level data (level)
event data (event)
identification data (ID)
time of event (time)

TRIGGER passes an event to the application when the time of the event (time) is reached. Content is written to the event element (event), and passed as is to the application.
<INTERFACE> data
<PLAY> playback function control tag
<STOP> stop function control tag
<SETRATE> special playback function control tag
<SETTIME> skip mode playback function control tag
<SETAUDIO> audio setup function control tag
<SETSUBTITLE> subtitle setting function control tag

The interface data tag <INTERFACE> contains a number of the player function control tags described above. Each tag corresponds to the member functions play, stop, setRate, setTime, setAudio, setSubtitle of a Title instance. Each tag also has an attribute level (level), which is set to the same full, restricted, or free values as the package level attribute.

For example, if the level attribute is full, using the member functions of the corresponding Title instance is restricted. Using said functions is enabled in this case only if the Status of the video reproduction apparatus Status is set to full package to enable playing the full package. The relationship between the level of each function and the Status of the player application is the same as with the package level (level) described above.

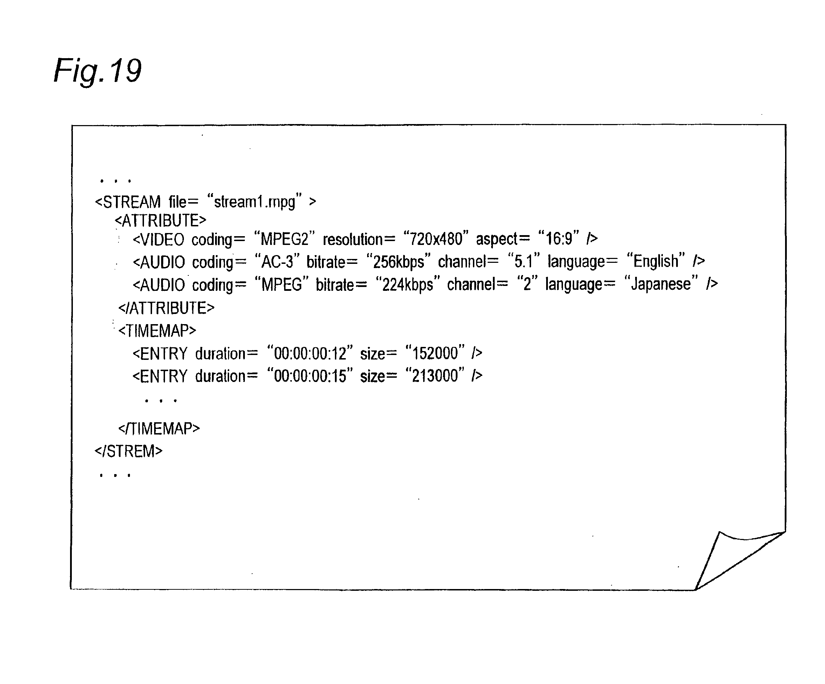

Fig. 19 describes the content of the stream data file stream.xml in detail.

The title data shown below is enclosed in <STREAM> tags.
<STREAM> stream data tag
file data (file)

The file attribute defines the file name of the stream to be reproduced.
<ATTRIBUTE> attribute data tag

The video and audio attribute data described below is written between <ATTRIBUTE> tags.
<VIDEO> video attribute data
compression information (coding)
resolution information (resolution)
aspect ratio information (aspect)
<AUDIO> audio attribute information tag
compression information (coding)
bit rate information (bitrate)
number of channels (channel)
language information (language)
<TIMEMAP> timemap information tag

The time and size of each VOBU (described in detail below) is described in the timemap information. The timemap records the unit playback time (frame count) and data size (byte count) of each VOBU entry.

When skipping to a desired time in the playback stream for reproduction, the VOBU to be played is detected by adding the time information for each entry in the timemap and adding the size of each VOBU to determine the seek address in the file.

The timemap data thus also functions as a filter for converting time and address information in the stream.
<ENTRY> entry data tag
time information (duration)
size information (size)

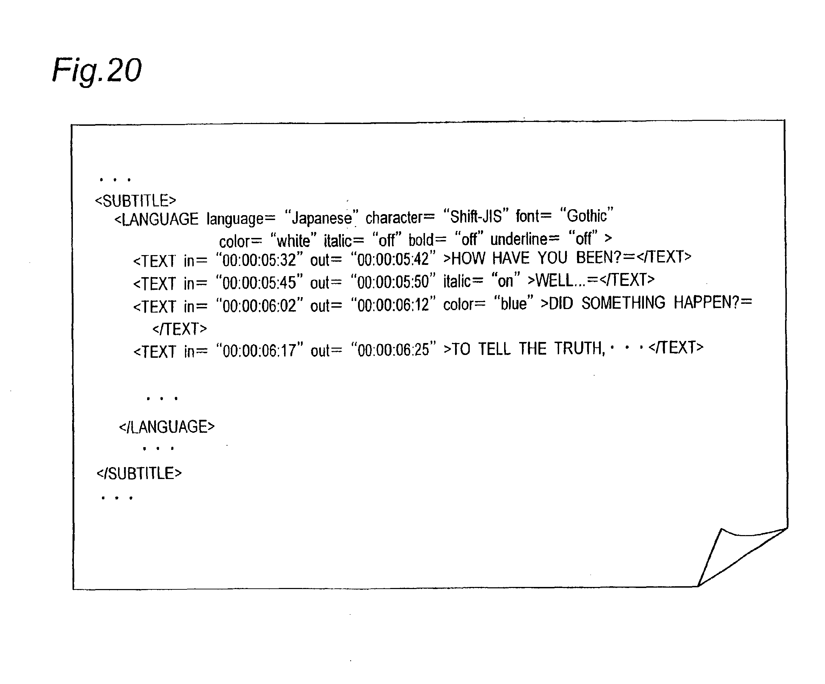

Fig. 20 shows the content of the subtitle data file subtitle.xml in detail.

Subtitles for each language are written between the <SUBTITLE> tags as described below.
<LANGUAGE> language data tag
language definition (language)
character data (character)
font information (font)
color (color)
italic (italic)
bold (bold)
underline (underline)

LANGUAGE tag attributes include the language such as English or Japanese, shift-JIS or other character encoding, Mincho or other font family, and style attributes.
<TEXT> text data tag
display start time data (in)
display end time data (out)
text

### (Stream structure)

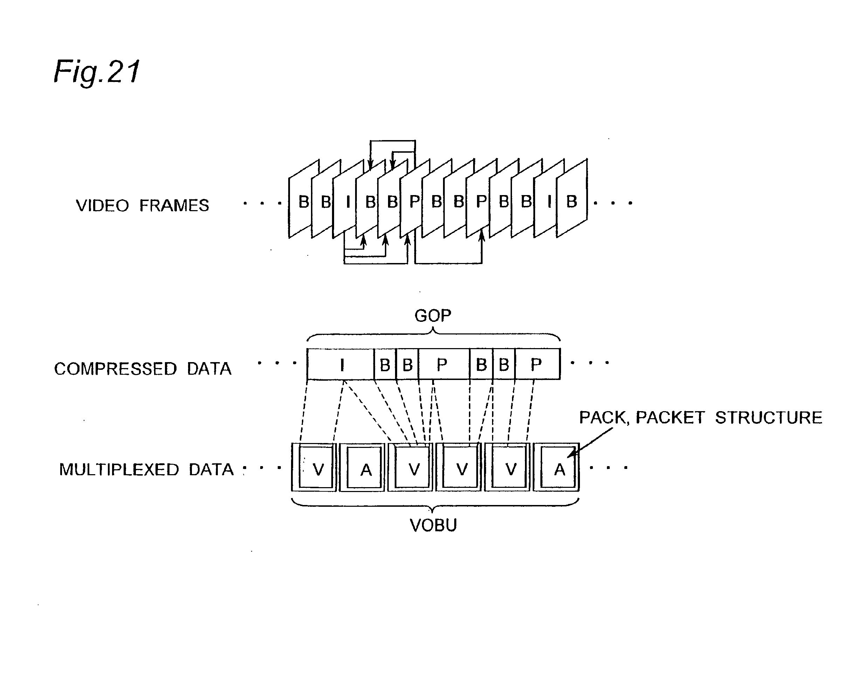

The stream is described in detail next with reference to Fig. 21.

The stream used in this embodiment of the invention is based on the international standard ISO/IEC 13818 known as MPEG-2. MPEG-2 consists of a video stream, audio stream, and system stream that multiplexes the video and audio streams (binding them to a single stream).

Video data is compressed to a GOP structure including I-pictures (intraframe coded), P-pictures (temporally predictive coded), and B-pictures (bidirectionally temporally coded). The referential relationship between these pictures is shown in Fig. 21.

The compressed video data is packetized and then packed, and then multiplexed with the audio data to form a single system stream.

VOBU are then formed based on the GOP (from a pack containing the beginning of a GOP to the pack at the beginning of the next GOP) in the multiplexed layer. The VOBU is introduced because a GOP is defined at the video layer and is not applicable to definition at the system layer.

The MPEG-2 system stream is also referred to as a VOB (Video Object) in this embodiment of the invention.

### (Player structure)

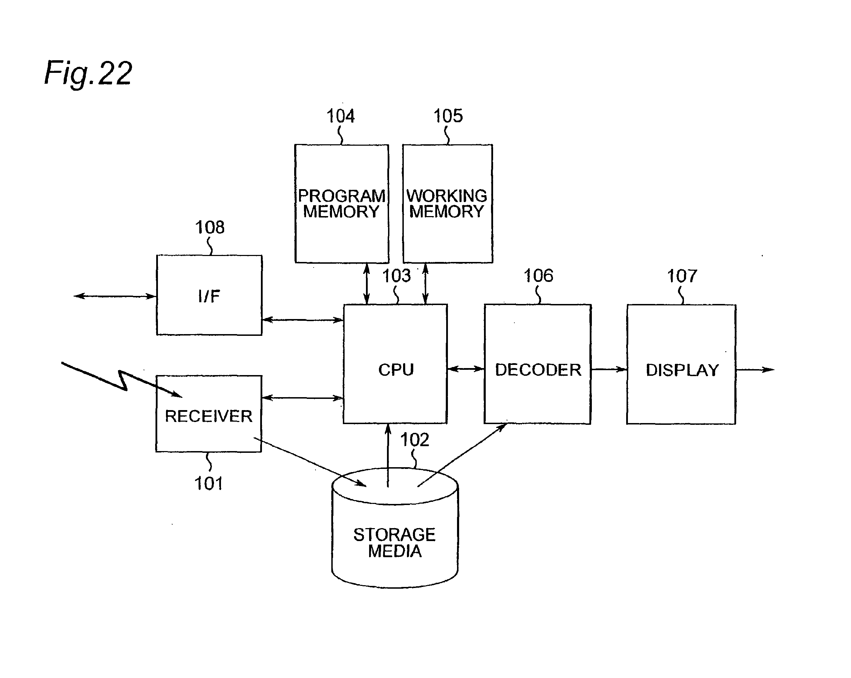

Fig. 22 is a block diagram of a video reproduction apparatus.

The video reproduction apparatus has a receiver 101 for receiving data from a set-top box or other external tuner, a storage medium 102 for recording data, a CPU 103, program memory 104, working memory 105, decoder 106 for decoding a stream, display 107 for presenting output to a monitor and speaker, and an interface 108 for receiving user requests. The CPU 103 has an internal clock for time and data information, and the playback control status (full, restricted, or free) of the video reproduction apparatus is stored to the working memory 105.

### (Class library details)

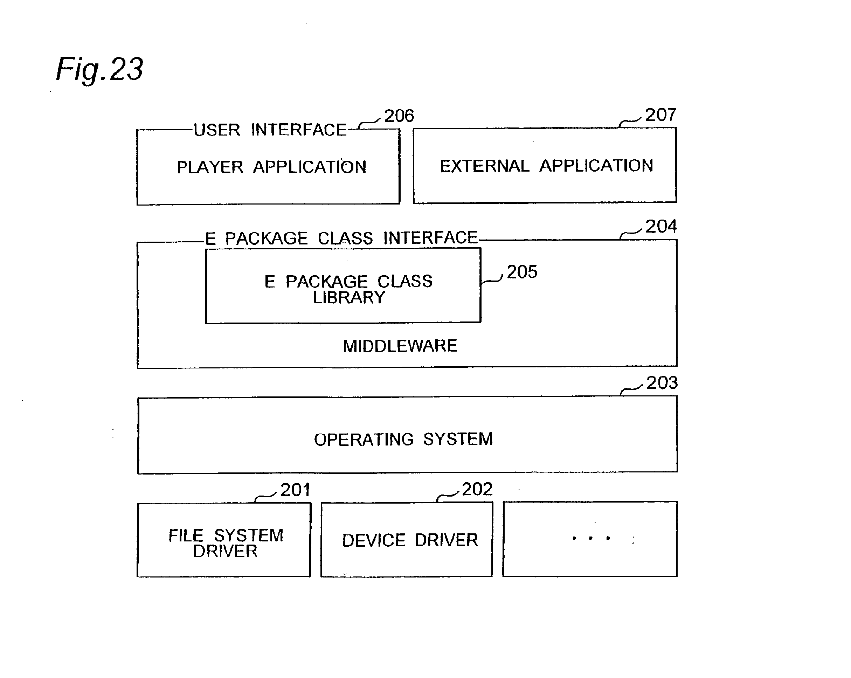

Fig. 23 shows the software structure of the e-package video reproduction apparatus.

The software structure is built around an operating system (OS 203) with a file system driver 201 and device drivers 202 under the OS 203. The file system driver 201 provides an environment for accessing data on the disk as files or applications using a directory structure. The device drivers 202 control computer hardware devices such as decoders and graphics cards.

Middleware 204 is installed on top of the OS. In the case of Java, for example, the Java Virtual Machine (JVM below) and class libraries are installed. An e-package class library 205 is also installed as one of these class libraries.

The standard class libraries and the e-package class library provide a programming environment of classes and member functions to applications.

in addition to a specialized e-package player application 206, external applications 207 provided by third parties can operate as applications.

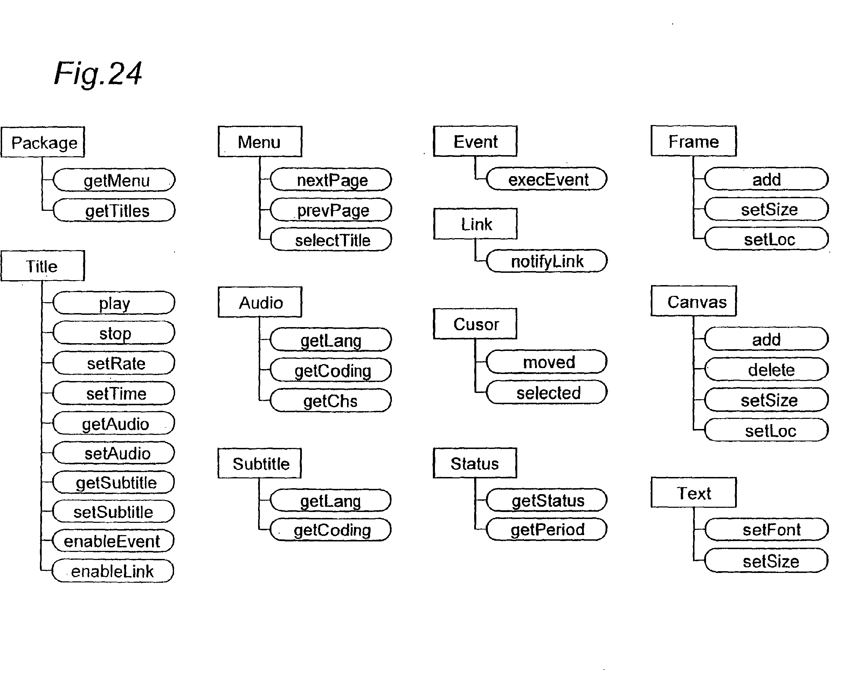

Fig. 24 shows the structure of the e-package classes included in the middleware.

E-package classes in the middleware include a Package class, Title class, Menu class, Audio class, Subtitle class, Event class, Link class, Cursor class, and Status class. Each of these is described below.

### * Package class

The Package class is the first class called. A Package class instance is created based on the package data file package.xml.

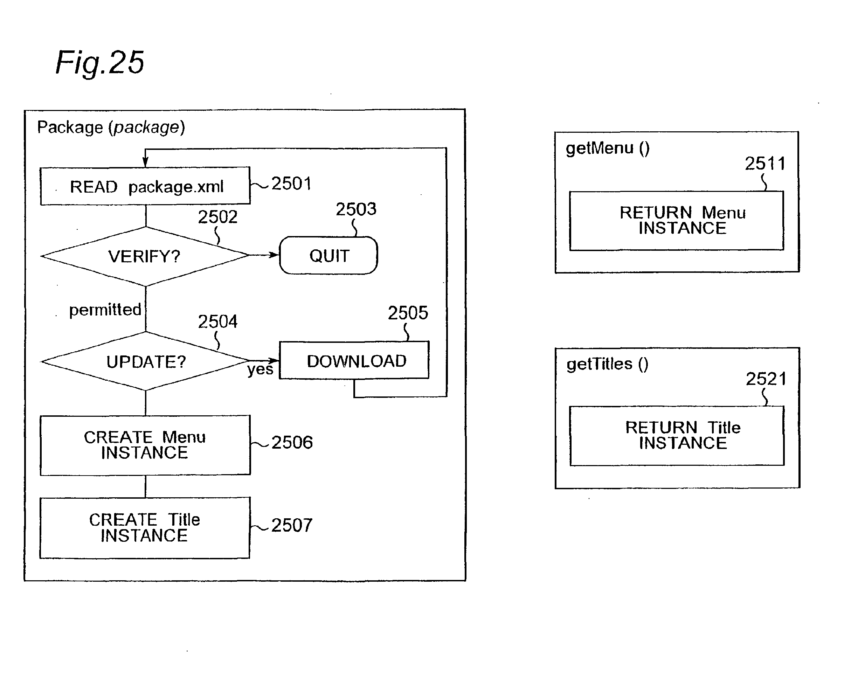

Fig. 25 shows the process controlled by the Package class.

The Package constructor (package) reads package.xml and gets the attribute values for a Package instance (2501 ). The attribute values of the instance are all described in the management data file as noted above.

Whether package playback is enabled is then verified based on the region information, level information, and expire date information (2502). If playback is prohibited, an error is returned to the application and the process ends (2503).

If the verification process is passed (playback is permitted), an update check is run (2504).

The date and time values of the <UPDATE> tag are then compared with the date and time values from the CPU; if the update notification date has passed and the automatic update attribute is set to "yes," the update is downloaded from the Internet (2505) and playback is resumed using the new playback control data (2501).

If an update is not downloaded as a result of the update check (2504), a Menu instance is created (2506) and a Title instance is created (2507).

A Package instance has getMenu and getTitles member functions. After a Package instance is created the application calls these functions to create Menu and Title instances.

### * Title class

The Title class controls playback of a title. An instance is created for each title and drawn on screen by adding the title instance to a Canvas instance. Playing a title is controlled by calling the member functions.

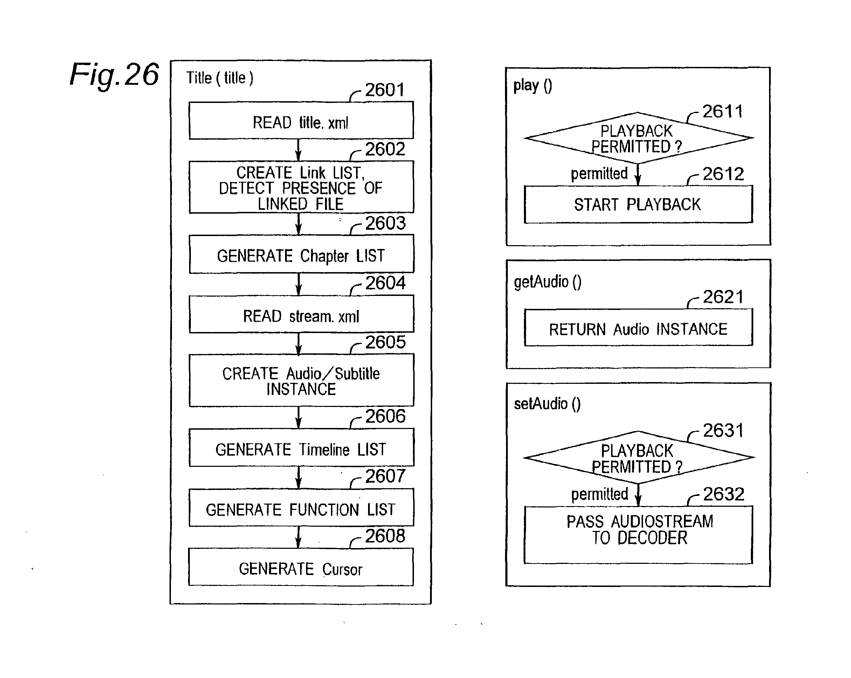

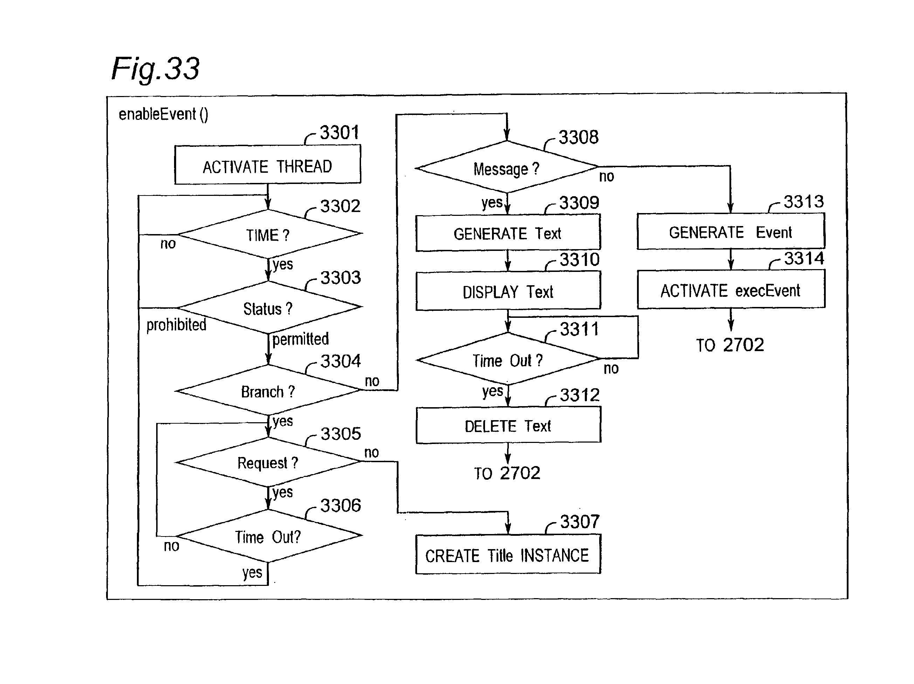

Fig. 26 and Fig. 33 show the Title class process.

The Title constructor (title) reads title.xml when initiated (2601) and internally generates a Link list based on Link_LIST (2602). Whether the titles are stored in an accessible location is checked at this time and any inaccessible titles are deleted from the list. More specifically, this check determines whether the files exist using a network protocol, for example, but this is not directly related to the present invention and detailed description thereof is therefore omitted.

A Chapter list is then generated (2603), the attribute data file (stream.xml, for example) for the stream referenced by the Chapter is read (2604), and Audio and Subtitle instances are created (2605).

Based on the TIMELINE information a Timeline list is then generated (2606), a function list is generated based on the INTERFACE data (2607), and finally a Cursor instance is created (2608) for handling requests input from a remote control device (interface).

The Title class also has various member functions.

Functions for directly controlling AV playback are play, stop, setRate setting the playback rate, and setTime setting the playback location. These functions serve the functions provided by the decoder directly to the application. For example, when play() is called by the application, the play() function checks whether playback is permitted or not, and the decoder is instructed to start playback only if playback is permitted.

Consider a case in which the playback function (play) is called from the application. The playback function (play) compares the playback status of the player (full playback, restricted playback, free only) with the usage restriction of the play() function from the function list (2611). If using this function is permitted, the function is run (2612). If using the function is not permitted, however, processing the function ends.

The relationship between the permitted and not-permitted status of the function is shown in the following table.

| level = | full | restricted | free |
|---|---|---|---|
| Status full playback | permitted | permitted | permitted |
| restricted playback | not permitted | permitted | permitted |
| free only | not permitted | not permitted | permitted |

This table applies not only to whether using functions of a Title instance are permitted or not permitted, but also for determining whether playback is permitted for the package level.

Audio and subtitle control are handled by getAudio and getSubtitle for getting the appropriate streams in the title; that is, an instance with the attribute values of each language, and setAudio and setSubtitle for setting the streams to play back.

getAudio and getSubtitle pass the Audio instance and Subtitle instance created by the Title constructor as the respective return values to the application (2621). The application sets the playback stream using these instances as arguments of setAudio and setSubtitle.

The setAudio and setSubtitle functions first determine if using the functions is permitted (2631). More specifically, the playback status of the video reproduction apparatus (full playback, restricted playback, free only) is compared with the usage restriction of the corresponding function contained in the function list. If the function can be used, the attribute values of the playback stream are set in the decoder according to the attribute values of the received instance (2632). If using the function is not permitted, however, processing the function ends.

The status of the video reproduction apparatus and these functions are compared using the table shown above.

In addition to the above, the Title class also has an enableEvent function for starting event processing and an enableLink function for starting processing title links.

The enableEvent function processes the timeline information (<TIMELINE>) described in the Title information, that is, the <BRANCH> information, <Message> information, and event trigger information (<TRIGGER>). The enableEvent function starts an internal thread when it is called (3301). The initiated thread runs the looping process described below.

That is, enableEvent monitors the playback time information to detect whether the current time matches the enable event time indicated for events on the timeline list, that is, whether the time matches the time indicated in the <BRANCH> data, <Message> information, or event trigger information (<TRIGGER>), for example (3302). If the time matches the enable event time, the Status of the video reproduction apparatus is checked (3303) to determine whether the event is permitted on the video reproduction apparatus.

If the event is permitted, it is determined whether the event type is a BRANCH requiring a request from the user (3304).

If the event is a BRANCH, enableEvent waits for a user request (3305) and loops to wait for a request until the BRANCH times out (indicated by out) (3306). If BRANCH times out (determined by out) without receiving a request, enableEvent loops back to the beginning (3302). If a request is received from a user before BRANCH times out, an instance of the branch Title (declared by jump) is created and the corresponding title is played back (3307).

If a BRANCH process is not detected in step 3304, that is, if a MESSAGE or event TRIGGER is detected, enableEvent goes to step 3308 to determine if the process is a MESSAGE or event trigger (TRIGGER). If the process is a message (MESSAGE), a Text instance is created from the specified message information (message) (3309), and the Text instance is added to a Canvas instance (3310). The message display is held until the message presentation period times out (out) (3311), and at the end of the message presentation period (out) the Text instance is deleted (deleted from the Canvas instance) (3312) and enableEvent returns to the beginning of the loop (3302).

If a TRIGGER process is detected in step 3308 an Event instance is created (3313), the eventExec function implemented by the application is run (3314), and the process then returns to the top of the loop (3302).

### * Menu class

The Menu class presents menus derived from the Title class. An instance is created for each menu of the same title and added to a Canvas class for presentation on screen.

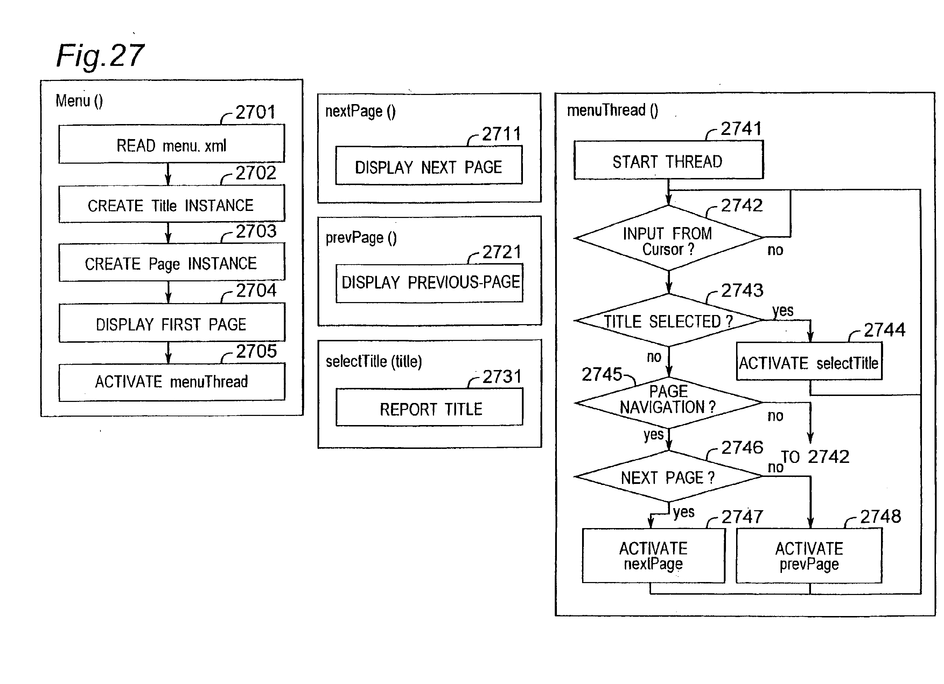

Fig. 27 shows the Menu class process.

The Menu() constructor reads the menu information file menu.xml (2701), passes a Title class process (2702) and generates menu pages (2703), presents the top menu page (2704), and starts a menuThread for handling Cursor events (2705).

The content displayed by each page is described using the <MENU_PAGE> tag in the MENU data as described with reference to Fig. 17. A button is created based on the <TITLE> element within the MENU_PAGE element and displayed on screen.

The nextPage member function enables navigating to the next page (2711) and the prevPage member function enables navigating to the previous page (2721) in the case of multipage menus. If a title is selected, the selectedTitle member function reports the selected title to the application (2731).

The menuThread member function starts a thread (2741) and receives events from the Cursor instance (2742). When an event is received from a Cursor instance, menuThread detects if the event is a title selection (2743); if a title selection event is detected the selectTitle function is called (2744) and the selected title is reported to the application.

If a title selection is not detected in step 2743 menuThread detects if the event is a page navigation event (2745); if yes, it is determined whether page navigation is to the next page or the previous page (2746) and the corresponding nextPage (2747) or prevPage (2748) function is called.

### * Audio class and Subtitle class

The Audio class contains attribute values for each audio stream. If, for example, there are two usable audio streams in a title, two instances of the Audio class are created. The audio stream to be reproduced is set by setting one of the Audio class instances to the setAudio function of the Title class.

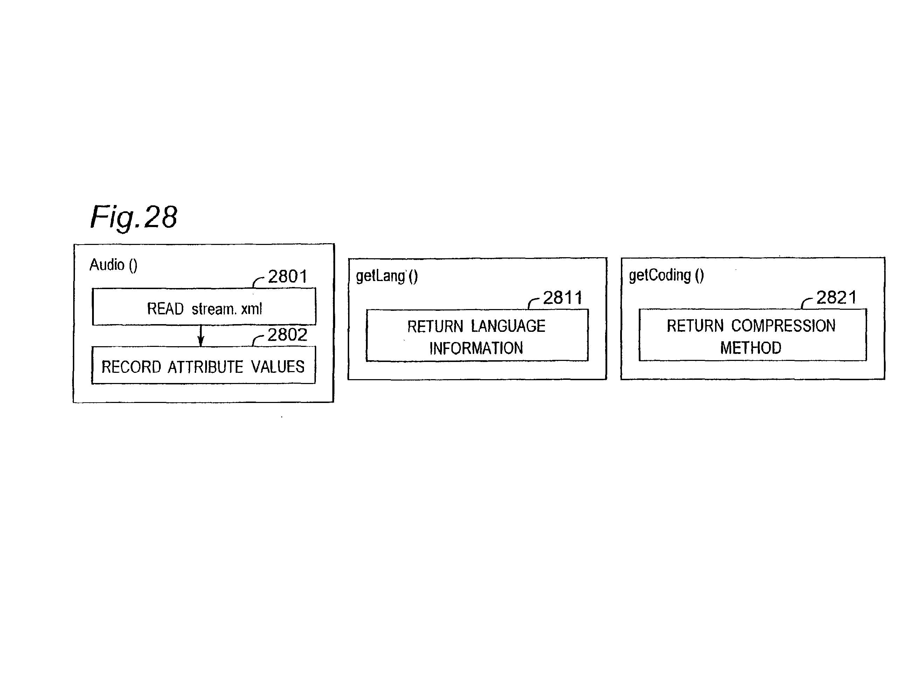

Fig. 28 shows the Audio class process.

The Audio() constructor reads the stream attribute data file stream.xml (2801) and stores the attribute values to the Audio class instance.

The Audio class also returns the language of the instance, that is, the language of the audio stream, to the application using the getLang member function (2811), returns the compression method of the instance, that is, the compression method of the audio stream, using the getCoding member function (2821), and returns the channel information of the instance, that is, the number of channels in the stream, using the getChs member function.

The Subtitle class has the same functions as the Title class.

### * Event class and Link class

The Event class is the class for generating events in a title, and the Link class is the class for generating title linking data events in a title.

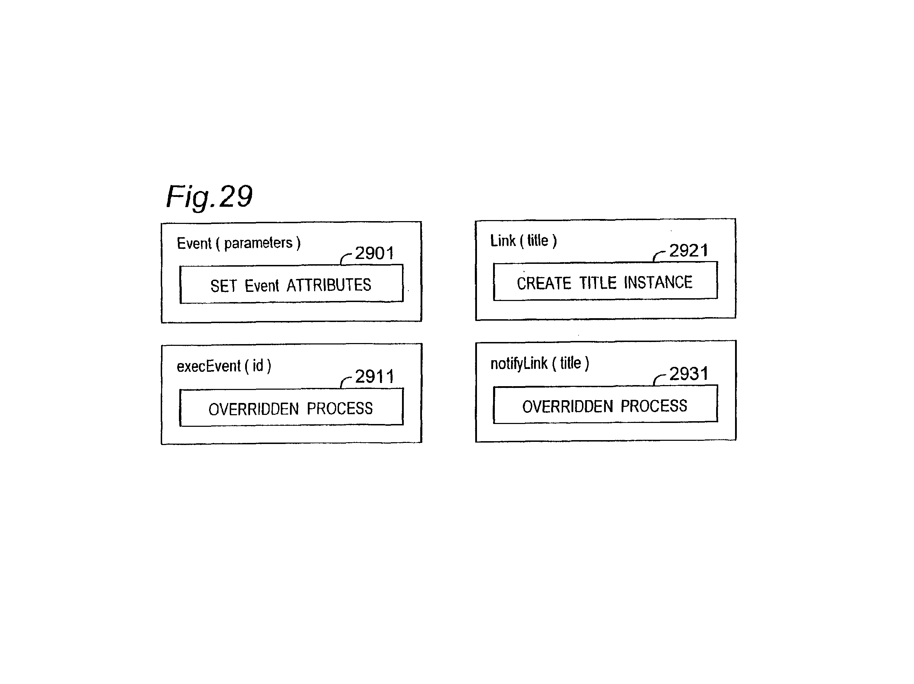

Fig. 29 shows the Event class and Link class processes.

The Event class constructor sets the Event attributes based on the parameters (2901).

The Event class member function execEvent is a function overridden by the application. That is, starting execEvent starts an event handler (2911). execEvent has an ID (id) as an argument enabling the application to identify what event trigger (TRIGGER) was applied and then branch to the triggered process.

The Link class constructor creates an instance of the Title supplied as an argument.

Like execEvent, the Link class member function notifyLink is a function overridden by the application, and the Link class passes a Title instance to the application using this function and runs the event process.

### * Cursor class

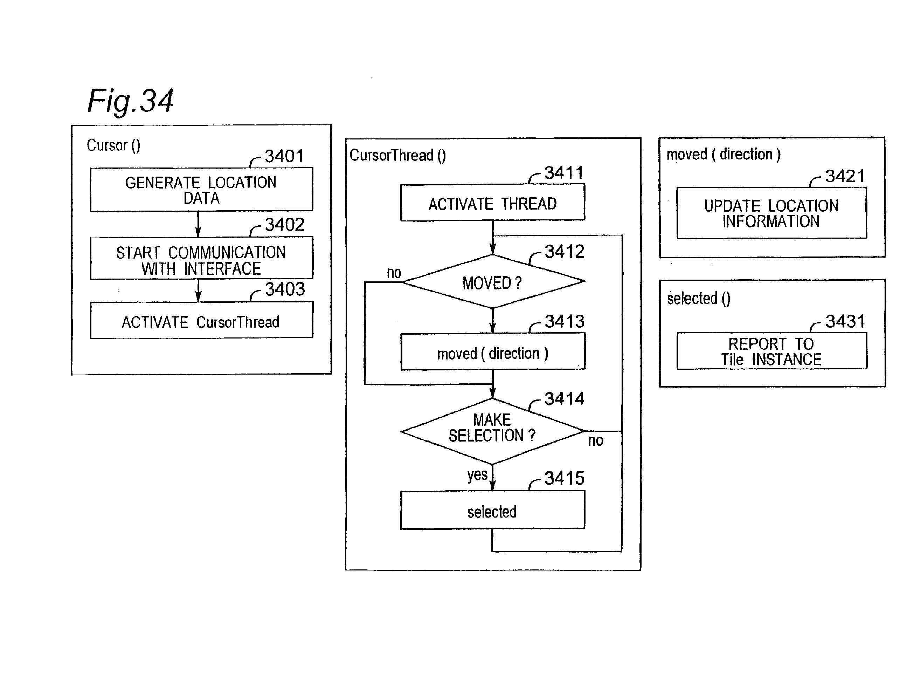

The Cursor class processes cursor events on screen, and is described with reference to Fig. 34.

The Cursor class constructor first generates/initializes the location information (3401), starts communicating with the remote control device (3402), and starts the cursor event handling thread CursorThread (3403).

The cursor event handling thread CursorThread first starts a thread (3411) and initiates the process loop. The process loop checks for cursor movement (3412), calls the moved function if the cursor moved (3413), and updates the location information. If a selection action is detected when the cursor did not move or after step 3413, that is, if user execution of a selection operation on a button selected by the cursor is detected (3414), the selected function is called (3415) and the selection passed to the current Title.

Based on a declared argument the moved function refreshes the location information (3421), and the selected function passes the selection execution request to the Title instance (3431).

### * Status class

The Status class describes the status of the video reproduction apparatus. This class is unique to the video reproduction apparatus or system and is not instantiated each time. The Status class can be accessed directly from the application.

A getStatus function enabling the application to know the status, and getPeriod function for knowing the valid period, are provided for class access

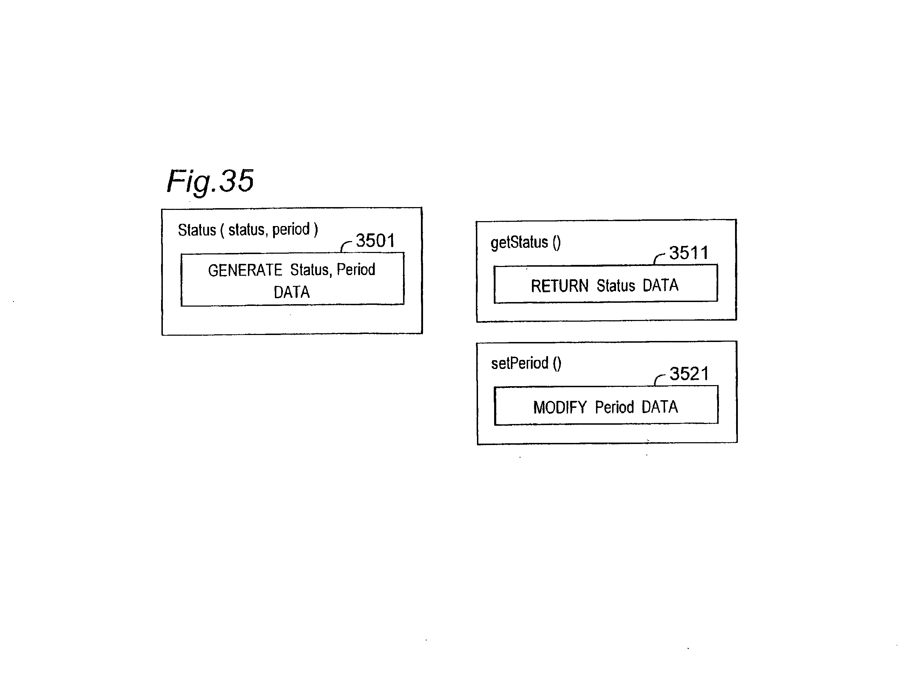

As shown in Fig. 35, the Status class internally generates Status information and Period information based on values provided as parameters (3501). The getStatus member function returns the Status data to the application (3511), and the getPeriod member function returns the Period data to the application (3521).

### * Frame class and Canvas class

These classes generate windows. The Frame class is the base class used for displaying a screen, and is equivalent to a window seen on the Windows OS. A Canvas instance for presenting moving pictures is added to a Frame instance.

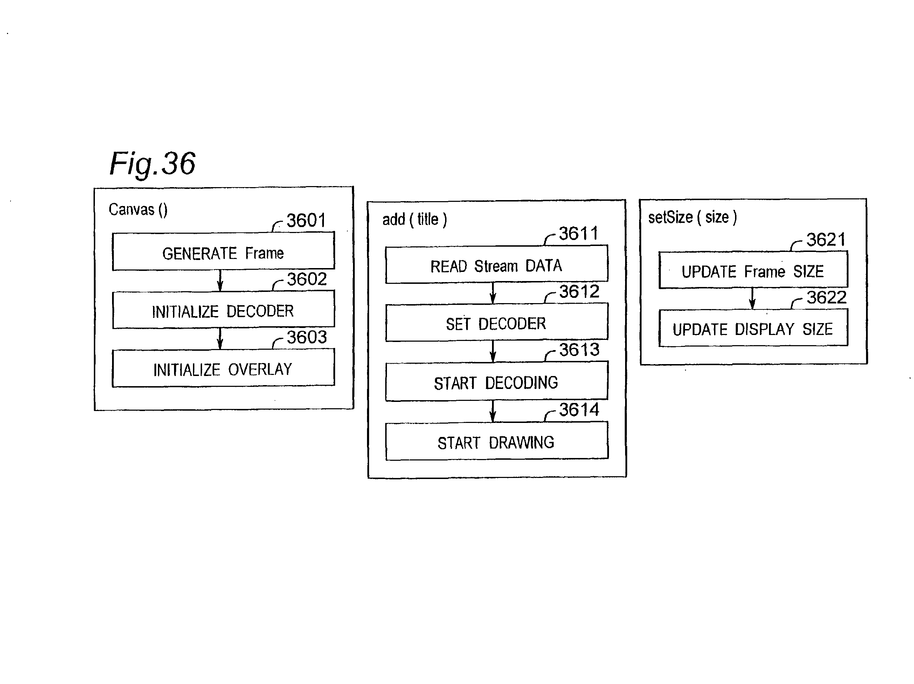

The Canvas class is described with reference to Fig. 36.

The Canvas class constructor creates a Frame instance for overlaying video data to the display (3601). The decoder is then initialized (3602) and an overlay, that is, graphics function, is initialized (3603). The decoder initialization process and graphics function initialization process are dependent upon the underlying operating system (OS) and hardware, are not fundamentally related to the present invention, and detailed description thereof is therefore omitted.

A window is drawn on screen by a Canvas instance, but drawing the actual images is done by the member function add. The add function is called as an argument of the Title instance, reads the stream data of the Title instance (3611) and sets the decoder (3612). The add function also causes the decoder to start the decoding process (3613), and starts drawing the decoded images to the overlay (3614).

The Canvas class also has a setSize member function whereby the Canvas size can be changed. The internal processes include changing the size of the Frame instance (3621) and changing the display size of the overlay (3622).

### (Player reproduction process)

The reproduction process executed as the player application is described next.

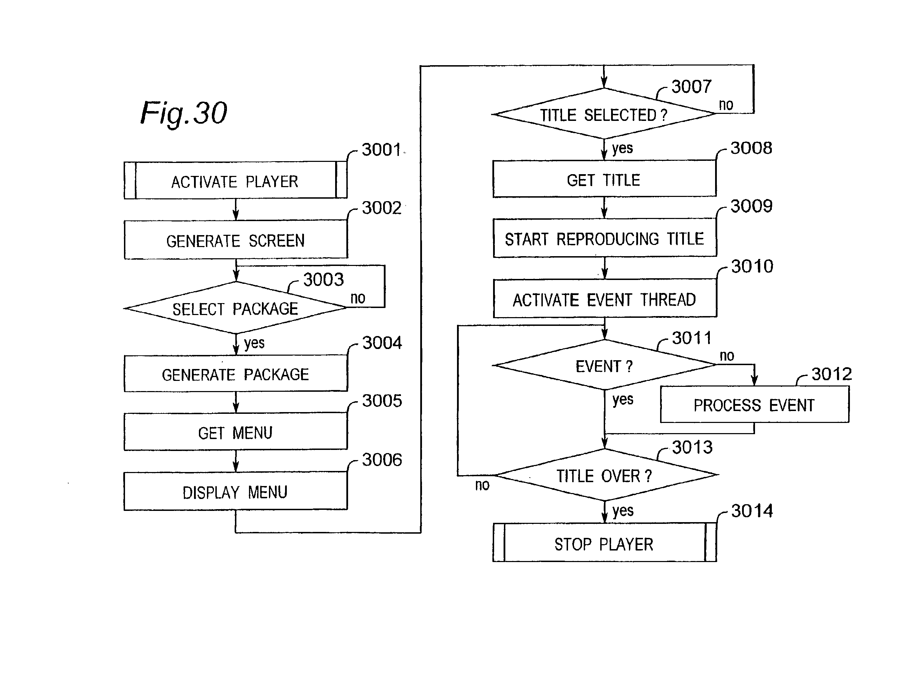

Fig. 30 is a flow chart of the reproduction process of the player.

After activation (3001), the player application creates a Canvas instance as described below and generates a video presentation window (3002). The internal operation of the Canvas instance is as described with reference to Fig. 36.
Canvas objCanvas = new Canvas();

The above expression is based on the Java language. "Canvas" at the left end is the class declaration, the following "objCanvas" declares that it is an object (instance) of the Canvas class, and "new Canvas()" calls the Canvas class constructor whereby the objCanvas instance is created.

The player application then waits for a package selection by the user (3003). After a package is selected, a Package instance is created as described below (3004), and a menu instance is obtained (3005) and the menu presented (3006). A Package instance is created as described with reference to Fig. 25.
Package objPackage = new Package(package);
Menu objMenu = objPackage.getMenu();
objCanvas.add(objMenu);

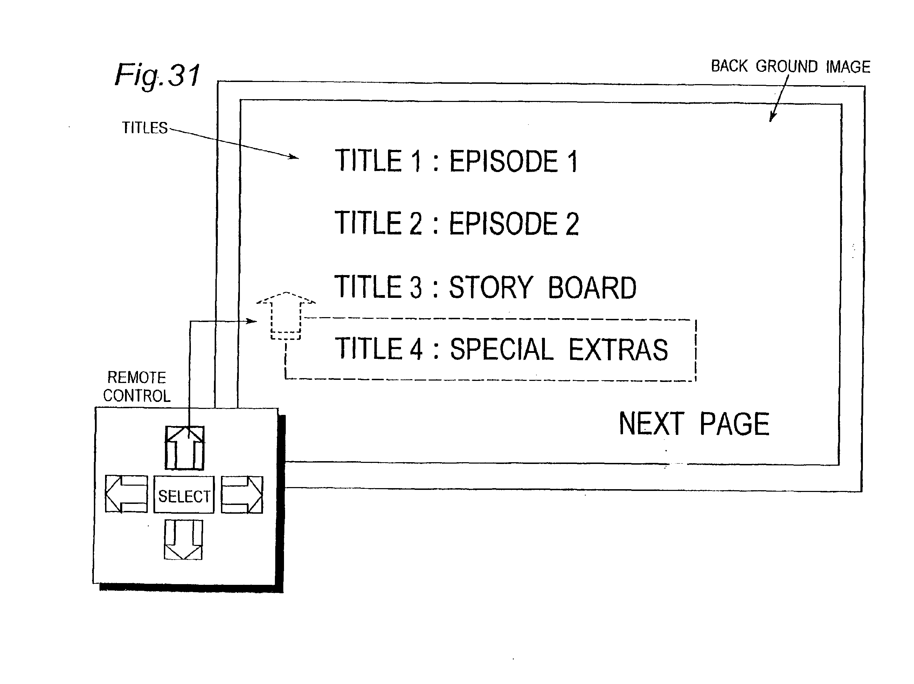

As shown in Fig. 31, a menu includes a background image and a title information display (text). A title is selected (3007) by moving the cursor with the remote control to the desired title and performing a "selection" action.

The cursor is moved using keys (up, down, right, left) on the remote control, and cursor movement and selection operations are detected and processed by the CursorThread function initiated as a thread as described with reference to Fig. 34.

If moving to the next page is selected, for example, the selected function of the Cursor instance is called and the Menu instance knows that a page navigation request was issued. The Menu instance then calls the nextPage function to send the menu to the next page.

If a selection action is executed with the cursor on title 4, for example, the Menu instance knows that a title was selected through the selected function of the Cursor instance. The selectedTitle function then notifies the application that a title was selected, and the application advances to the title reproduction steps (3008 and following).

Using the selected title information as an argument, the player application calls the getTitle function of the Package instance and gets a Title instance (3008). The player application then calls the play function of the Title instance to start playback (3009), and calls the enableEvent function to start an event thread (3010).
Title objTitle = objPackage.getTitle(title);
objTitte.play();
objTitle.enableEvent();

Event detection (3011), event processing when an event is generated (3012), and detecting the end of title playback (3013) then repeat until reproduction of the title is completed. Processing by the player application ends when it is confirmed that title playback has ended (3014).

Event processing in step 3012 is as described above with reference to Fig. 33.

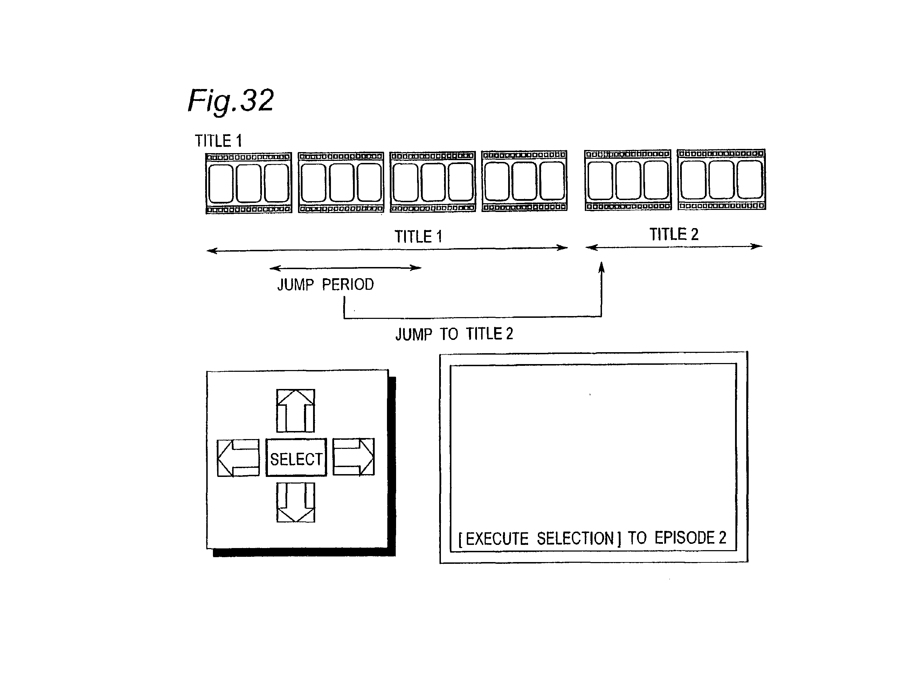

Jumping between titles while reproducing a title is described with reference to Fig. 32.

A period in which jumping to Title 2 is enabled is set in Title 1 as shown in the figure. This jump period is defined using BRANCH tags and associated attribute values inserted to the TIMELINE data in the Title 1 data file title1.xml. A message is displayed as shown at the bottom in Fig. 32 during this jump period, and playback moves to the point in Title 2 indicated by the link if the user presses a "select" key.

When the jump period (the period specified by the in and out attributes of the <BRANCH> element) is entered (Fig. 33, 3302), the Status of the BRANCH process and the Status of the video reproduction apparatus (fetched using Status.getStatus()) are compared (as shown in the above table); if processing is permitted (Fig. 33, 3303), the BRANCH is confirmed (Fig. 33, 3304) and a loop waiting for a user request is entered (Fig. 33, 3305 and 3306).

Selection requests from the user are received through a Cursor instance (Fig. 34, 3414 and 3415). When a selection request from the user is detected a new Title instance is created and reproduction of the next title (Title 2 in Fig. 32) begins (Fig. 34, 3307). If a user selection request is not detected by the end of the jump period (out), the BRANCH process ends after a timeout is detected (Fig. 33, 3306).

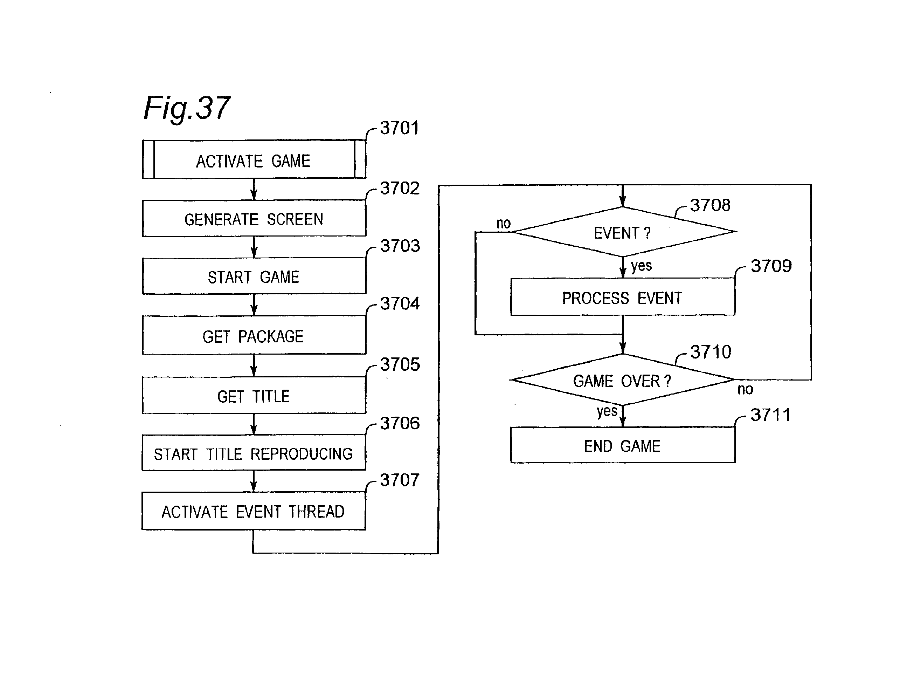

Fig. 37 is an example of a game application. In this example a game application runs instead of a player application (3701). As with the player application, a Canvas instance is created and a video display window generated (3702). The internal operation of creating a Canvas instance is as described with reference to Fig. 36.
Canvas objCanvas = new Canvas();

The game application starts the game (3703), gets a Package instance used by the game application (3704), and gets a Title instance (3705). The play function of the Title instance is then called to start playing the title (3706), and the enableEvent function is called to activate an event thread (3707).
Package objPackage = new Package(package);
Title objTitle = objPackage.getTitle(title);
objTitle.play();
objTitle.enableEvent();

Event detection (3708), event processing when an event is generated (3709), and detecting the end of title playback (3710) then repeat until the game ends. Game application processing ends when it is confirmed that the game has ended (3711).

The game and AV playback in a game application can be synchronized using an event trigger. An event trigger element (<TRIGGER>) as shown below could, for example, be inserted to the timeline data element (<TIMELINE>) in the title information (<TITLE>) described with reference to Fig. 18.
<TRIGGER level="full" id="1" event="1" time="00:01:00:00"/>

At time 00:01:00:00 (1 minute), the event thread confirms the indicated time (time) (Fig. 33, 3302), confirms the Status (Fig. 33, 3303), confirms the branch selection (Branch) (Fig. 33, 3304), checks the message (Message) (Fig. 33, 3308), generates the Event (Fig. 33, 3313), and then runs execEvent (Fig. 33, 3314).

The game application overrides the activated member function execEvent, and based on the id obtained from execEvent is able to synchronize processing on the game side.

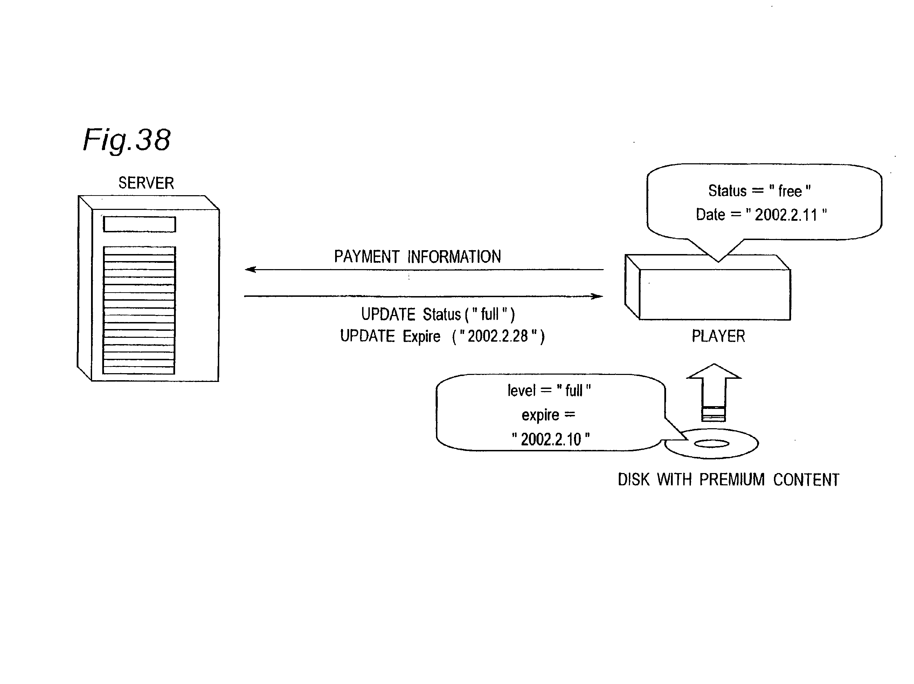

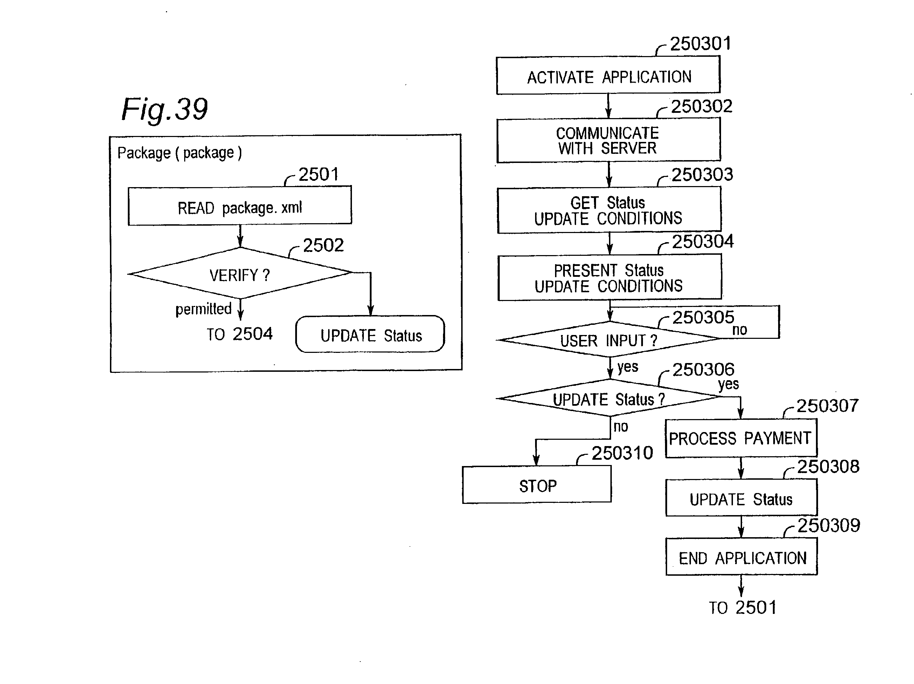

Fig. 38 and Fig. 39 describe an example for updating the Status and Expire values from a server over a network in order to remove the playback restrictions imposed by the Status and expiration date (Expire) settings of the package and the video reproduction apparatus.

As described with reference to Fig. 25, whether or not a package can be reproduced is verified (Fig. 25, 2502) by comparing the playback level (level) and expiration date (expire) settings of the package with the Status setting and date/time information of the video reproduction apparatus. If playback is permitted, processing proceeds from step 2504, and if playback is not permitted the reproduction process ends with step 2503.

A process for updating the Status of the video reproduction apparatus or the expiration date (expire) of the package can be run instead of terminating the reproduction process (2503 in Fig. 25).

Fig. 39 shows an example of communicating with a server to update the Status of the video reproduction apparatus when playback is not possible because the Status of the video reproduction apparatus does not match the package level setting (level).

Instead of terminating (2503 in Fig. 25), the Status is updated (2503) in the example in Fig. 39. This is accomplished by first activating an update application (250301). This update application can be a single application executing at the middleware level in the same way as the player application and game application, or it could be a binary code base application run directly at the operating system level. If it is an application run at the middleware level, the player application could activate the update application through the Loader class.

The update application communicates with the server (250302) using a Socket class provided by middleware (Java) or directly using a network protocol (such as TCP/IP). The server that the update application talks to is indicated by the Package <INTERNET URL = ""/> element. The application then communicates with the server to obtain the condition (monetary amount) required to update the Status (250303), and presents the update conditions to the user (250304).

The application then waits for a response from the user (250305). If the user wants to update the Status (250306), a transaction is processed with the server (250307), a Status update process is run (250308), the update application then terminates (250309), and the player application continues processing from step 2501 in Fig. 25.

This transaction process can be handled by inputting and communicating a credit card number. Various technologies are available for processing payments using the Internet, are not fundamentally related to the present invention, and detailed description thereof is therefore omitted.

If the user elects to not update the Status in step 250306, the process terminates (250310).

It should be noted that while updating the Status is described here by way of example, updating the expiration date (expire) can be handled in the same way. In this case, however, the package expiration date (expire) is updated instead of updating the Status of the video reproduction apparatus. If the package is recorded to rewritable media, the expire date can be updated directly. If stored to read-only media, the expiration information can be re-used by providing a system for temporarily recording the expiration information (expire) to a hard disk drive, non-volatile memory, or other temporary recording medium available to the video reproduction apparatus.

A video reproduction system according to the present invention is directed not only to a video reproduction apparatus for simply playing movies, but also to achieving a variety of other applications. This video reproduction apparatus therefore includes middleware for absorbing differences in function according to the type of operating system as software read into and run in internal memory. This middleware has class libraries containing tools enabling the player application to reproduce video content and used to run expanded applications including game applications. More specifically, this middleware contains e-package class libraries as described above. The tools are classes and member functions used to achieve the various functions. Functions provided to the player application, game application, or other application by these class libraries are described in the function list recorded to the playback control data (management information) contained in the package media. This function list also has Status information for each function, and by comparing this Status information with the Status information of the video reproduction system, it is possible to control at the function level the content that can be reproduced by a video reproduction system.

It is therefore possible to control various e-package applications according to the type or quality of business or service.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A video reproduction apparatus for reproducing externally supplied package media, wherein:
the package media contains video content storing video data and playback control data for controlling reproduction of the video data in a specified data format, and extensible application software for using the video content,
the video reproduction apparatus comprises as software stored and executed in internal memory
an operating system chosen from operating systems of plural types,
middleware for absorbing differences in function according to the type of operating system, and
player application software that runs on the middleware level for reproducing the video content;
the middleware having a class library including tools used by the player application to play back the package media or to run the extensible application software;
the player application software consistently reproducing the video content of the package media according to the specified format by way of the tools included in the middleware class libraries; and
the extensible application software running by way of the tools included in the class libraries of the middleware using video content contained in the same package media.

2. A video reproduction apparatus according to claim 1, wherein the video reproduction apparatus manages playback status data, the playback control data of the package media includes playback restriction data corresponding to the playback status data, and the extensible application software sets a tool contained in the class libraries of the middleware to an invalid state by analyzing the playback control data and comparing the playback restriction data in the playback control data with the playback status data.

3. A video reproduction method for reproducing externally supplied package media with a video reproduction apparatus, wherein:
the package media contains
video content storing video data and playback control data controlling reproduction of the video data in a specified data format, and
extensible application software for using the video content;
the video reproduction method comprising:
a step for reading into internal memory of the video reproduction apparatus and activating an operating system chosen from operating systems of plural types;
a step for reading into internal memory of the video reproduction apparatus and activating middleware for absorbing differences in function according to the type of operating system, the middleware having a class library including tools used by application software operating at the middleware level to run or reproduce the package media;
a step for reading into internal memory of the video reproduction apparatus and activating a player application operating at the middleware level for reproducing the video content;
a step for reading into internal memory of the video reproduction apparatus and activating extensible application software operating at the middleware level and using the video content,
wherein the player application software consistently reproduces the video content of the package media according to the specified format through the tools included in the class libraries of the middleware, and
wherein the extensible application software runs by way of the tools included in the class libraries of the middleware using video content.

4. A video reproduction program for reproducing externally supplied package media, wherein:
the package media contains
video content storing video data and playback control data controlling reproduction of the video data in a specified data format, and
extensible application software for using the video content;
the video reproduction program comprises as software stored and executed in internal memory:
an operating system chosen from operating systems of plural types,
middleware for absorbing differences in function according to the type of operating system, and
player application software that runs on the middleware level for reproducing the video content;
the middleware having a class library including tools used by the player application to play back the package media or to run the extensible application software;
the player application software consistently reproducing the video content of the package media according to the specified format by way of the tools included in the middleware class libraries; and
the extensible application software running by way of the tools included in the class libraries of the middleware using video content contained in the same package media.

5. A computer-readable recording medium storing a video reproduction program according to claim 4.

6. Package media externally supplied to a video reproduction apparatus and reproduced by the video reproduction apparatus, the package media containing:
video content storing video data and playback control data controlling reproduction of the video data in a specified data format, and
extensible application software for using the video content;
the video reproduction apparatus comprising as software stored and executed in internal memory:
an operating system chosen from operating systems of plural types;
middleware for absorbing differences in function according to the type of operating system; and
player application software that runs on the middleware level for reproducing the video content;
the middleware having a class library including tools used by the player application to play back the package media or to run the extensible application software; the player application software consistently reproducing the video content of the package media according to the specified format by way of the tools included in the middleware class libraries; and the extensible application software running by way of the tools included in the class libraries of the middleware using video content contained in the same package media.
